# EUROPEAN PATENT SPECIFICATION

(11) **EP 4 539 572 B1**
(45) Date of publication and mention of the grant of the patent: **02.09.2026**
(21) Application number: 23896182.5
(22) Date of filing: 07.09.2023
(51) Int. Cl.: H04W 8/18, H04W 8/20, H04W 72/0446, H04W 88/06

(54) **TIME-DOMAIN RESOURCE MANAGEMENT METHOD, ELECTRONIC DEVICE AND SYSTEM**
VERFAHREN ZUR VERWALTUNG VON ZEITBEREICHSRESSOURCEN, ELEKTRONISCHE VORRICHTUNG UND SYSTEM
PROCÉDÉ DE GESTION DE RESSOURCE DE DOMAINE TEMPOREL, DISPOSITIF ÉLECTRONIQUE ET SYSTÈME

(30) Priority: 28.11.2022 CN 202211508613
(43) Date of publication of application: 16.04.2025
(73) Proprietor: Honor Device Co., Ltd., Shenzhen, Guangdong 518040 (CN)
(72) Inventor: SUN, Xiaoyu, Shenzhen, Guangdong 518040 (CN)
(74) Representative: Goddar, Heinz J.
(86) International application number: PCT/CN2023/117587
(87) International publication number: WO 2024/114025

(56) References cited:
- CN-A- 103 026 776
- CN-A- 111 436 128
- CN-A- 114 793 152
- US-A1- 2015 327 159
- US-A1- 2022 039 110

## Description

### TECHNICAL FIELD

This application relates to the field of communications, and in particular, to time-domain resource management methods, an electronic device and a computer-readable storage medium.

### BACKGROUND

Currently, two subscriber identity modules (subscriber identity modules, SIMs) may generally be installed on a terminal device supporting dual SIM cards. Two SIM cards may be connected to a mobile communication network at the same time to implement a data sending and receiving service. When the terminal device is configured with only one radio frequency transmission channel (also referred to as an uplink channel), the two SIM cards may transmit signals to a base station at different time periods in a time division multiplexing (time division multiplexing, TDM) manner by using the same radio frequency transmission channel. However, in this process, if a SIM card running a high-priority service occupies the uplink channel in a specific slot, within a frame that the slot is in, regardless of whether the SIM card transmits a signal to the base station by using the uplink channel, a SIM card running a low-priority service cannot use the uplink channel. As a result, idle time of the uplink channel is long, and utilization efficiency of the uplink channel is low.

US 2022/039110 A1 describes methods for wireless communications that provide for a wireless device with dual subscriptions to prioritize a subscriber. A user equipment (UE) may configure a first channel for a first subscription and a second channel for a second subscription. The UE may determine one or more slots for the first subscription for communicating in a first direction and for the second subscription for communicating in a second direction, where the first and second directions are different. The UE may prioritize communications of the first subscription according to the determined slots. The prioritizing may be based on the direction, whether the communications are scheduled or configured, or whether the slot includes a monitoring occasion. The UE may communicate in the first direction according to the first subscription.

### SUMMARY

This application provides time-domain resource management methods, an electronic device and a computer-readable storage medium. When a SIM card 1 running a high-priority service occupies an uplink channel in a specific slot to send uplink data to a base station 10, if within a radio frame that the slot is in, the SIM card 1 does not occupy the uplink channel in another slot to send the uplink data to the base station 10, UE 30 may enable a SIM card 2 to occupy the uplink channel to send uplink data to a base station 20. In this way, idle time of the uplink channel can be reduced, and utilization efficiency of the uplink channel can be improved.
The invention is defined by the independent claims. Advantageous embodiments of the invention are given by the dependent claims.

According to a first aspect, this application provides a time-domain resource management method, applied to an electronic device including a first SIM card and a second SIM card. The electronic device is configured with only one radio frequency transmission channel, the first SIM card sends uplink data to a first access network device based on the radio frequency transmission channel, and the second SIM card sends uplink data to a second access network device based on the radio frequency transmission channel. The method includes: The electronic device receives first time-domain resource configuration information sent by the first access network device, where the first time-domain resource configuration information is used to indicate one or more slots allocated by the first access network device to the first SIM card in a radio frame of a first time-domain resource. The electronic device receives second time-domain resource configuration information sent by the second access network device, where the second time-domain resource configuration information is used to indicate one or more slots allocated by the second access network device to the second SIM card in a radio frame of a second time-domain resource. The electronic device sends the uplink data to the first access network device by using the first SIM card in a first slot, where the first slot is in a first radio frame of the first time-domain resource. The electronic device sends, before the electronic device sends the uplink data in a second slot of a second radio frame in the second time-domain resource and when the electronic device determines not to send the uplink data by using the first SIM card in a third slot of the first radio frame, the uplink data to the second access network device by using the second SIM card on the radio frequency transmission channel in the second slot, where the first radio frame is the same as the second radio frame in time, and the second slot is the same as the third slot in time. In this way, idle time of an uplink channel can be reduced, and utilization efficiency of the uplink channel can be improved.

In a possible implementation, the electronic device receives one or more pieces of uplink grant UL grant information, where the one or more pieces of uplink grant UL grant information include first UL grant information sent by the second access network device, and the first UL grant information is used to indicate the electronic device to send the uplink data by using the second SIM card in the second slot. In this way, a slot in which the uplink data can be sent by the second SIM card can be efficiently found, so that idle time of an uplink channel can be reduced, and utilization efficiency of the uplink channel can be improved.

In a possible implementation, before that the electronic device sends the uplink data to the first access network device by using the first SIM card in a first slot, the method further includes: The electronic device receives second UL grant information sent by the second access network device, and receives third UL grant information sent by the first access network device, where the second UL grant information is used to indicate the electronic device to send the uplink data by using the second SIM card in a fourth slot of the second time-domain resource, the third UL grant information is used to indicate the electronic device to send the uplink data by using the first SIM card in the first slot, and the first slot is the same as the fourth slot in time.

In a possible implementation, the first slot is an uplink slot or a flexible slot, and the second slot is an uplink slot or a flexible slot.

In a possible implementation, the method further includes: The electronic device determines, when the electronic device does not receive the fourth UL grant information, not to send the uplink data by using the first SIM card in the third slot, where the fourth UL grant information is used to indicate the electronic device to send the uplink data by using the first SIM card in the third slot of the first radio frame in the first time-domain resource.

In a possible implementation, the first slot is in a first periodicity. When duration of the first periodicity is 5 milliseconds, a starting moment of the first periodicity is the 0^{th} millisecond or the 5^{th} millisecond of the radio frame, and when the duration of the first periodicity is 2.5 milliseconds, the starting moment of the first periodicity is the 0^{th} millisecond, the 2.5^{th} millisecond, the 5^{th} millisecond, or the 7.5^{th} millisecond of the radio frame.

In a possible implementation, the first slot is adjacent to the second slot in time.

In a possible implementation, the second slot and the first slot are in the first periodicity.

In a possible implementation, the first slot is in the first periodicity, the second slot and the third slot are in a second periodicity, and the second periodicity is a next periodicity adjacent to the first periodicity. That the electronic device sends, before the electronic device sends the uplink data in a second slot of a second radio frame in the second time-domain resource and when the electronic device determines not to send the uplink data by using the first SIM card in a third slot of the first radio frame, the uplink data to the second access network device by using the second SIM card on the radio frequency transmission channel in the second slot specifically includes: The electronic device sends, when the electronic device determines not to send the uplink data by using the first SIM card in the third slot and the electronic device determines not to send the uplink data by using the first SIM card within the second periodicity before the third slot, the uplink data to the second access network device by using the second SIM card on the radio frequency transmission channel in the second slot. In this way, power consumption of the electronic device can be saved.

According to a second aspect, this application provides a time-domain resource management method, applied to an electronic device including a first SIM card and a second SIM card. The electronic device is configured with only one radio frequency transmission channel, the first SIM card sends uplink data to a first access network device based on the radio frequency transmission channel, and the second SIM card sends uplink data to a second access network device based on the radio frequency transmission channel. The method includes: The electronic device receives first time-domain resource configuration information sent by the first access network device, where the first time-domain resource configuration information is used to indicate one or more slots allocated by the first access network device to the first SIM card in a radio frame of a first time-domain resource. The electronic device receives second time-domain resource configuration information sent by the second access network device, where the second time-domain resource configuration information is used to indicate one or more slots allocated by the second access network device to the second SIM card in a radio frame of a second time-domain resource. The electronic device sends, before the electronic device sends uplink data in a fifth slot in the second time-domain resource and when the electronic device determines to send the uplink data by using the first SIM card at one or more uplink symbols in a sixth slot in the first time-domain resource, the uplink data to the second access network device by using the second SIM card on the radio frequency transmission channel at one or more uplink symbols in the fifth slot, where the fifth slot is the same as the sixth slot in time, and time of the one or more uplink symbols in the fifth slot is different from time of the one or more uplink symbols in the sixth slot. In this way, idle time of an uplink channel can be reduced, and utilization efficiency of the uplink channel can be improved.

In a possible implementation, the fifth slot is an uplink slot or a flexible slot, and the sixth slot is an uplink slot or a flexible slot.

According to a third aspect, this application provides a communication system, including an electronic device, a first access network device, and a second access network device. The electronic device includes a first SIM card and a second SIM card, and the electronic device is configured with only one radio frequency transmission channel. The first access network device is configured to send first time-domain resource configuration information to the electronic device. The second access network device is configured to send second time-domain resource configuration information to the electronic device. The electronic device is configured to determine, based on the received first time-domain resource configuration information, one or more slots allocated by the first access network device to the first SIM card in a radio frame of a first time-domain resource. The electronic device is further configured to determine, based on the received second time-domain resource configuration information, one or more slots allocated by the second access network device to the second SIM card in a radio frame of a second time-domain resource. The electronic device is further configured to send uplink data to the first access network device by using the first SIM card in a first slot, where the first slot is in a first radio frame of the first time-domain resource. The electronic device is further configured to send, before the electronic device sends uplink data in a second slot of a second radio frame in the second time-domain resource and when the electronic device determines not to send the uplink data by using the first SIM card in a third slot of the first radio frame, uplink data to the second access network device by using the second SIM card on the radio frequency transmission channel in the second slot, where the first radio frame is the same as the second radio frame in time, and the second slot is the same as the third slot in time. The second access network device is further configured to receive the uplink data sent by the electronic device.

In a possible implementation, the electronic device is further configured to: receive second UL grant information sent by the second access network device, and receive third UL grant information sent by the first access network device, where the second UL grant information is used to indicate the electronic device to send the uplink data by using the second SIM card in a fourth slot of the second time-domain resource, the third UL grant information is used to indicate the electronic device to send the uplink data by using the first SIM card in the first slot, and the first slot is the same as the fourth slot in time.

In a possible implementation, the first slot is an uplink slot or a flexible slot, and the second slot is an uplink slot or a flexible slot.

In a possible implementation, the electronic device is further configured to: determine, when the electronic device does not receive fourth UL grant information, not to send the uplink data by using the first SIM card in the third slot, where the fourth UL grant information is used to indicate the electronic device to send the uplink data by using the first SIM card in the third slot of the first radio frame in the first time-domain resource.

In a possible implementation, the first slot is in a first periodicity. When duration of the first periodicity is 5 milliseconds, a starting moment of the first periodicity is the 0^{th} millisecond or the 5^{th} millisecond of the radio frame, and when the duration of the first periodicity is 2.5 milliseconds, the starting moment of the first periodicity is the 0^{th} millisecond, the 2.5^{th} millisecond, the 5^{th} millisecond, or the 7.5^{th} millisecond of the radio frame.

In a possible implementation, the second slot and the first slot are in the first periodicity.

In a possible implementation, the first slot is adjacent to the second slot in time.

In a possible implementation, the first slot is in the first periodicity, the second slot and the third slot are in a second periodicity, and the second periodicity is a next periodicity adjacent to the first periodicity. The electronic device is specifically configured to: send, when the electronic device determines not to send the uplink data by using the first SIM card in the third slot and the electronic device determines not to send the uplink data by using the first SIM card within the second periodicity before the third slot, the uplink data to the second access network device by using the second SIM card on the radio frequency transmission channel in the second slot.

According to a fourth aspect, this application provides a chip or a chip system, including a processing circuit and an interface circuit. The interface circuit is configured to receive code instructions and transmit the code instructions to the processing circuit, and the processing circuit is configured to run the code instructions to perform the method according to any one of the possible implementations in any one of the foregoing aspects. In this way, idle time of an uplink channel can be reduced, and utilization efficiency of the uplink channel can be improved.

According to a fifth aspect, this application provides an electronic device, including: one or more processors, one or more memories, a modem modem, a radio frequency transmission path, a first SIM card, and a second SIM card. The one or more memories are coupled to the modem, the one or more memories are configured to store computer program code, the computer program code includes computer instructions, and when the modem executes the computer instructions, the electronic device is enabled to perform the method according to any one of the possible implementations in any one of the foregoing aspects. In this way, idle time of an uplink channel can be reduced, and utilization efficiency of the uplink channel can be improved.

According to a sixth aspect, this application provides a computer-readable storage medium, including computer instructions. When the computer instructions are run on an electronic device, the electronic device is enabled to perform the method according to any one of the possible implementations in any one of the foregoing aspects. In this way, idle time of an uplink channel can be reduced, and utilization efficiency of the uplink channel can be improved.

### BRIEF DESCRIPTION OF DRAWINGS

FIG. 1 is a schematic diagram of an architecture of a communication system according to an embodiment of this application;
FIG. 2Ais a schematic diagram of a structure of a radio frame according to an embodiment of this application;
FIG. 2B is a schematic diagram of a structure of a hybrid slot according to an embodiment of this application;
FIG. 2C is a schematic diagram of a slot ratio within a periodicity according to an embodiment of this application;
FIG. 3A is a schematic diagram of an unconfigured time-domain resource according to an embodiment of this application;
FIG. 3B is a schematic diagram of time-domain resource configuration according to an embodiment of this application;
FIG. 3C is a schematic diagram of another time-domain resource configuration according to an embodiment of this application;
FIG. 4A is a schematic diagram of a specific process of a time-domain resource management method according to an embodiment of this application;
FIG. 4B is a schematic diagram of a structure of time-domain resource configuration according to an embodiment of this application;
FIG. 4C is a schematic diagram of a structure of another time-domain resource configuration according to an embodiment of this application;
FIG. 4D is a schematic diagram of uplink channel switching according to an embodiment of this application;
FIG. 5 is a schematic diagram of a structure of a communication apparatus according to an embodiment of this application; and
FIG. 6 is a schematic diagram of a structure of a network apparatus according to an embodiment of this application.

### DESCRIPTION OF EMBODIMENTS

Terms used in the following embodiments of this application are merely intended to describe particular embodiments, and are not intended to limit this application. As used in this specification and the appended claims of this application, the singular expression form, "one", "a/an", "said", "foregoing", "the", and "this" are intended to also include the plural expression form, unless clearly indicated to the contrary in the context. It should be further understood that the term "and/or" used in this application indicates and includes any or all possible combinations of one or more listed items. In embodiments of this application, the terms "first" and "second" are used merely for the purpose of description, and cannot be understood as indicating or implying relative importance or implying a quantity of indicated technical features. Therefore, a feature defined with "first" and "second" may explicitly or implicitly includes one or more features. In the descriptions of embodiments of this application, unless otherwise stated, "plurality of" means two or more.

First, a communication system provided in an embodiment of this application is described.

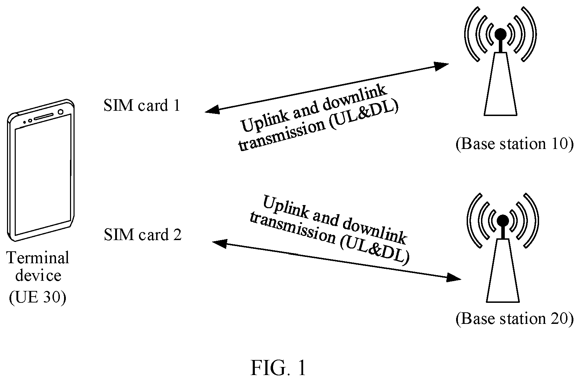

FIG. 1 is a schematic diagram of an architecture of a communication system according to an embodiment of this application.

As shown in FIG. 1, the communication system may include one or more access network devices and one or more terminal devices connected to the access network device. For example, FIG. 1 shows two access network devices (for example, a base station 10 and a base station 20), and a terminal device (for example, UE 30). It may be understood that FIG. 1 is merely a schematic diagram, and does not constitute a limitation on an applicable scenario of the technical solution provided in this application.

The access network device may be a transmission reception point (transmission reception point, TRP), a base station, a relay node, a node, an access point, or the like. The access network device may be an access network device in a 5G communication system or an access network device in a future evolved network. The access network device may be a base transceiver station (base transceiver station, BTS) in a global system for mobile communications (global system for mobile communication, GSM) or a code division multiple access (code division multiple access, CDMA) network, may be a NodeB (NodeB, NB) in wideband code division multiple access (wideband code division multiple access, WCDMA), may be an evolved NodeB (evolutional NodeB, eNB) in long term evolution (long term evolution, LTE), or may be a gNodeB (gNodeB, gNB) in new radio (new radio, NR). The access network device may alternatively be a radio controller in a cloud radio access network (cloud radio access network, CRAN) scenario. The technical solution provided in this application is described below by using a base station (for example, the base station 10 and the base station 20) as an example in embodiments of this application.

The terminal device may be user equipment (UE), an access terminal, a UE unit, a UE station, a mobile station, a mobile console, a remote station, a remote terminal, a mobile device, a UE terminal, a wireless communication device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal in a 5G network, a terminal in a future evolved public land mobile network (public land mobile network, PLMN), or the like. The technical solution provided in this application is described below by using user equipment UE (for example, the UE 30) as an example in embodiments of this application.

In this embodiment of this application, the base station 10 and the base station 20 shown in FIG. 1 may be base stations in an LTE/NR communication system. The base station 10 and the base station 20 may include a carrier in a low frequency band, such as a carrier in a B28/n28 frequency band. The base station 10 and the base station 20 may alternatively include a carrier in a high frequency band, such as a carrier in an n41 frequency band. The UE 30 may perform uplink transmission with the base station 10 and the base station 20 (to be specific, the UE 30 transmits a signal to the base station 10 and the base station 20, in other words, the UE 30 sends uplink data, uplink, UL) and perform downlink transmission with the base station 10 and the base station 20 (to be specific, the base station 10 and the base station 20 transmit a signal, downlink, DL, to the UE 30) by using the carrier in the B28/n28 frequency band or the carrier in the n41 frequency band. A link used for the uplink transmission between the UE 30 and the base station 10 as well as the base station 20 may be referred to as an uplink, and a link used for the downlink transmission between the UE 30 and the base station 10 as well as the base station 20 may be referred to as a downlink.

In this embodiment of this application, the UE 30 shown in FIG. 1 is configured with two subscriber identity modules (subscriber identity modules, SIMs), a SIM card 1 and a SIM card 2, respectively. When one of the two SIM cards runs a high-priority service with a high real-time requirement (for example, a voice call service), the other SIM card may run a low-priority service with a low real-time requirement (for example, a web page browsing service). For example, during a time period 1, the SIM card 1 runs a high-priority service with a high real-time requirement, and the SIM card 2 may run a low-priority service with a low real-time requirement. During a time period 2, the SIM card 2 may run a high-priority service with a high real-time requirement, and the SIM card 1 may run a low-priority service with a low real-time requirement. In other words, a SIM card running a high-priority service and a SIM card running a low-priority service may be changed. This is not limited in this application. In the following embodiments, an example in which the SIM card 1 runs a high-priority service and the SIM card 2 runs a low-priority service is used for description. The UE 30 may communicate with the base station 10 by using the SIM card 1, and the UE 30 may communicate with the base station 20 by using the SIM card 2. For the UE 30 using the SIM card 1 and the SIM card 2, communication may be performed in a dual SIM and dual active (dual SIM and dual active, DSDA) manner. In the communication manner, the two SIM cards may perform communication services at the same time. When the UE 30 is configured with only one radio frequency transmission channel (which may also be referred to as an uplink channel), the two SIM cards may transmit signals to a base station in different time periods in a time division multiplexing manner by using the same radio frequency transmission channel. In this case, modes of the two SIM cards may be referred to as time division duplex (time division duplexing, TDD) modes. The foregoing mode of sharing a set of radio frequency transmission channels by using a time division multiplexing technology is also referred to as a radio frequency sharing mode.

However, in the radio frequency sharing mode, if the SIM card 1 card running a high-priority service occupies the uplink channel to send uplink data to the base station 10 in a specific slot, within time corresponding to a radio frame that the slot is in, regardless of whether the SIM card 1 transmits a signal to the base station 10 in another slot by using the uplink channel, the SIM card 2 running a low-priority service cannot use the uplink channel. As a result, idle time of the uplink channel is long, and utilization efficiency of the uplink channel is low.

Therefore, an embodiment of this application provides a time-domain resource management method.

In the time-domain resource management method, when the SIM card 1 running a high-priority service occupies the uplink channel in a specific slot to send uplink data to the base station 10, if within a radio frame that the slot is in, the SIM card 1 does not occupy the uplink channel in another slot to send the uplink data to the base station 10, within time corresponding to the radio frame that the slot is in, the UE 30 may enable the SIM card 2 to occupy the uplink channel to send uplink data to the base station 20. In this way, idle time of the uplink channel can be reduced, and utilization efficiency of the uplink channel can be improved. A specific implementation is described in detail in the following embodiments and is not described herein.

The following describes a time-domain resource structure for uplink transmission of a SIM card provided in an embodiment of this application.

In this embodiment of this application, a time-domain resource may be a radio frame (also referred to as a frame (Frame) for short), a slot, and a symbol that are used for uplink and downlink transmission (UL&DL). The symbol may be an orthogonal frequency division multiplexing (Orthogonal Frequency Division Multiplexing, OFDM) symbol.

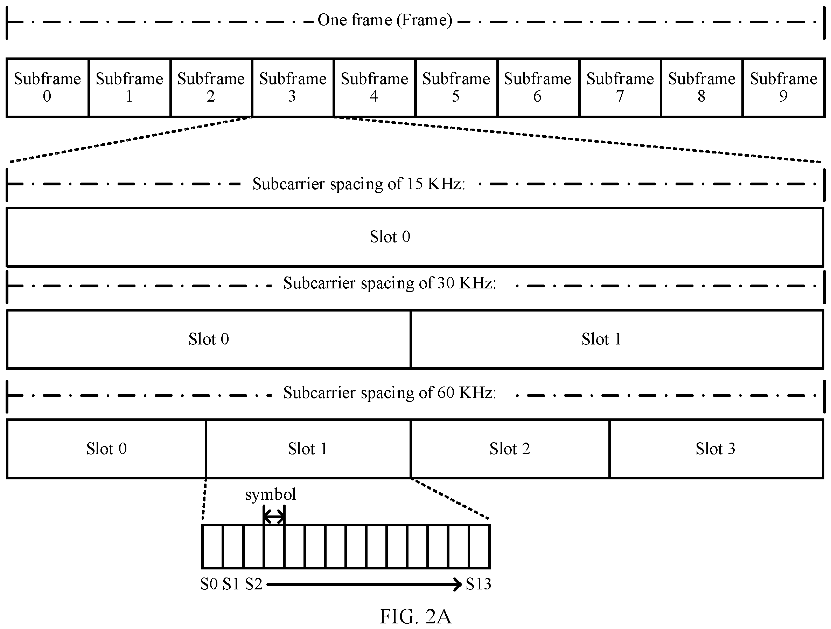

As shown in FIG. 2A, duration of one frame is generally 10 milliseconds (milliseconds, ms).

One frame may generally include 10 subframes, which may be denoted as a subframe 0 to a subframe 9, respectively.

One subframe may include one or more slots, and a quantity of slots is related to a subcarrier spacing. For example, when the subcarrier spacing is 15 kilohertz (kilohertz, KHz), one subframe may include one slot, which may be denoted as Slot 0. When the subcarrier spacing is 30 KHz, one subframe may include two slots, which are denoted as Slot 0 and Slot 1, respectively. When the subcarrier spacing is 60 KHz, one subframe may include four slots, which are denoted as Slot 0, Slot 1, Slot 2, and Slot 3, respectively. The following embodiments uses an example in which the subcarrier spacing is 30 KHz and one subframe includes two slots for description.

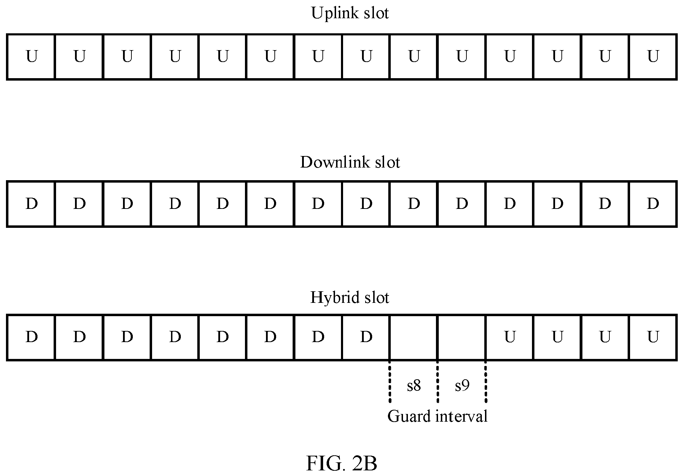

One slot may usually include 14 symbols, and the 14 symbols may be respectively denoted as s0 to s13. A symbol is the smallest unit of the time-domain resource structure. The symbol may be an uplink symbol for uplink transmission. The uplink symbol may be demoted as "U". The symbol may alternatively be a downlink symbol for downlink transmission. The downlink symbol may be demoted as "D". Slot types may include the following three types based on a ratio of uplink symbols to downlink symbols in a slot: an uplink slot, a downlink slot, and a flexible slot. As shown in FIG. 2B, an uplink slot may be denoted as "U", and all of 14 symbols in the uplink slot are uplink symbols. A downlink slot may be denoted as "D", and all 14 symbols in the downlink slot are downlink symbols. A flexible slot may include a fully flexible slot and a hybrid slot. 14 symbols in the fully flexible slot may all be used for uplink transmission and downlink transmission and as guard intervals or reserved resources based on a specific service scenario. The hybrid slot includes at least one uplink symbol and/or downlink symbol. In the hybrid slot shown in FIG. 2B, s0 to s7 are downlink symbols, s8 and s9 are guard intervals, and s10 to s13 are uplink symbols.

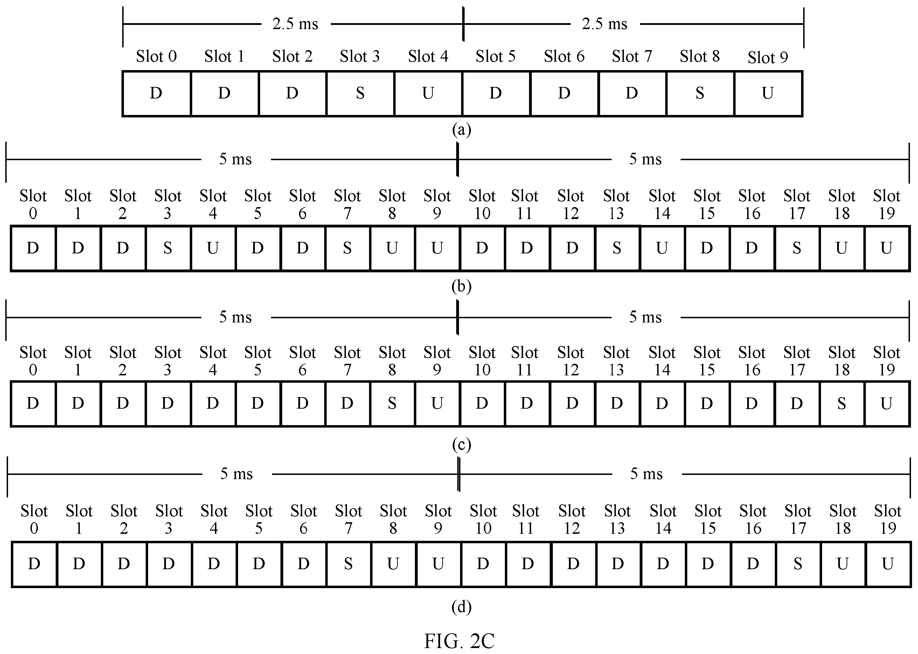

As shown in FIG. 2C, within a periodicity of specified duration (for example, 2.5 ms or 5 ms), different slot ratios may be used in a time domain based on a ratio relationship between an uplink slot, a downlink slot, and a flexible slot. The following describes examples of some slot ratio structures.

As shown in section (a) of FIG. 2C, with a periodicity of 2.5 ms, a slot ratio may be a downlink slot : a flexible slot : an uplink slot = 3:1:1.

As shown in section (b) ofFIG. 2C, with a periodicity of 5 ms, a slot ratio may be a downlink slot : a flexible slot : an uplink slot = 5:2:3.

As shown in section (c) of FIG. 2C, with a periodicity of 5 ms, a slot ratio may be a downlink slot : a flexible slot : an uplink slot = 8:1:1.

As shown in section (d) of FIG. 2C, with a periodicity of 5 ms, a slot ratio may be a downlink slot : a flexible slot : an uplink slot = 7:1:2.

It should be noted that the time-domain resource structure described above is merely an example for describing this application and does not constitute a specific limitation on this application.

Next, time-domain resource configuration included in a time-domain resource management method provided in an embodiment of this application is described.

The time-domain resource management method includes time-domain resource configuration on a SIM card 1 by a base station 10 and time-domain resource configuration on a SIM card 2 by a base station 20, and UE 30 can obtain a time-domain resource configuration situation, such as a slot ratio in a time domain and a symbol ratio in a slot, so that the UE 30 determines time for the SIM card 1 and the SIM card 2 to perform uplink and downlink transmission respectively. The following uses an example in which the base station 10 performs time-domain resource configuration on the SIM card 1 for description.

In a time-domain configuration framework provided in this embodiment of this application, the time-domain resource configuration may include cell-level time-domain resource configuration and UE-level time-domain resource configuration. The "cell" herein means a range that a signal transmitted by the base station 10 can cover.

The cell-level time-domain resource configuration is that the base station 10 broadcasts time-domain resource configuration information to the UE 30. Cell-level time-domain resource configuration information has a limitation on all UEs accessing the cell. Specifically, for any UE applying to access the base station 10, settings of an uplink time-domain resource (an uplink slot and an uplink symbol) and a downlink time-domain resource (a downlink slot and a downlink symbol) of the UE need to first satisfy a requirement of the cell-level time-domain resource configuration information.

The UE-level time-domain resource configuration is a process in which the base station 10 semi-statically or dynamically performs further configuration on an unconfigured time-domain resource or a configured flexible time-domain resource according to different service scenarios based on the cell-level time-domain resource configuration information. The time-domain resource configuration information delivered by the base station 10 in a UE-level time-domain resource configuration process may be referred to as UE-level time-domain resource configuration information.

### (1) Cell-level time-domain resource configuration

In some embodiments, the UL/DL of the UE 30 corresponds to a time division duplex mode. In the foregoing scenario, the base station 10 may broadcast uplink and downlink time-domain resource configuration information of the UE 30.

Specifically, the base station 10 may broadcast a system information block SIB1 in a physical downlink shared channel (Physical Downlink Shared CHannel, PDSCH). The SIB1 may include a cell-specific high-layer parameter TDD-UL-DL-ConfigCommon. TDD-UL-DL-ConfigCommon may be referred to as the uplink and downlink time-domain resource configuration information of the UE 30.

TDD-UL-DL-ConfigCommon may include a subcarrier spacing, duration of one periodicity, a plurality of uplink and downlink parameters, and the like. The uplink and downlink parameters include an uplink parameter and a downlink parameter. The uplink parameter may be used to indicate a slot and/or a symbol for uplink transmission. The downlink parameter may be used to indicate a slot and/or a symbol for downlink transmission DL.

The uplink parameter may include a first uplink slot quantity and a first uplink symbol quantity. The first uplink slot quantity may be used to indicate positions and a quantity of uplink slots in a time-domain resource. The first uplink symbol quantity may be used to indicate positions and a quantity of uplink symbols adjacent to the uplink slots.

The downlink parameter may include a first downlink slot quantity and a first downlink symbol quantity. The first downlink slot quantity may be used to indicate positions and a quantity of downlink slots in a time-domain resource. The first downlink symbol quantity may be used to indicate positions and a quantity of downlink symbols adjacent to the downlink slots.

Specifically, for the uplink and downlink parameters, refer to Table 1 below.

**Table 1**

| Parameter | Meaning |
|---|---|
| nrofDownlinkSlots (first downlink slot quantity) | Indicates a quantity of downlink slots counted onward from the first slot |
| nrofDownlinkSymbols (first downlink symbol quantity) | Indicates a quantity of downlink symbols counted from the first symbol of a slot following the last downlink slot in nrofDownlinkSlots |
| nrofUplinkSlots (first uplink slot quantity) | Indicates a quantity of uplink slots counted backward from the last slot |
| nrofUplinkSymbols (first uplink symbol quantity) | Indicates a quantity of uplink symbols counted backward from the last symbol of a slot previous to the last uplink slot in nrofUplinkSlots. |
| dl-UL-TransmissionPeriodicity (periodicity duration value) | Indicates duration of one periodicity, with a value of 0.625 ms, 1.25 ms, 2.5 ms, 5 ms, 10 ms, or the like. |
| ReferenceSubcarrierSpacing (reference subcarrier spacing) | Indicates a frequency of a subcarrier spacing, with a value of 15 KHZ, 30 KHz, 60 KHz, or the like. |

It can be learned from Table 1 that the parameters in Table 1 are optional. As shown in Table 1, the periodicity duration value parameter indicates duration of one periodicity. The reference subcarrier spacing parameter indicates a frequency of a subcarrier spacing. All or some of the uplink and downlink parameters (including nrofDownlinkSlots, nrofDownlinkSymbols, nrofUplinkSlots and nrofUplinkSymbols) indicate types and quantities of slots (or symbols) in a slot set within one periodicity: an uplink slot (or symbol) and a downlink slot (or symbol).

For example, it is assumed that values of parameters in TDD-UL-DL-ConfigCommon are as follows:
$ReferenceSubcarrierSpacing = 30 KHz ;$
$dl - UL - TransmissionPeriodicity = 5 ms ,$
nrofDownlinkSlots=2, nrofDownlinkSymbols=3,
nrofUplinkSlots=1, and nrofUplinkSymbols=3.

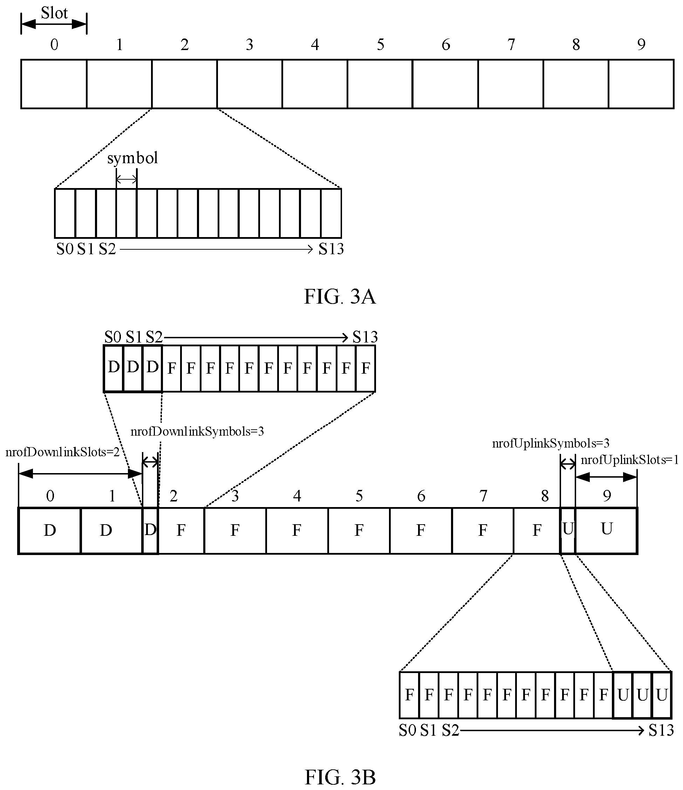

In this case, it can be learned from the foregoing parameters that the subcarrier spacing in the time-domain resource configuration information is 30 KHz, and the duration of one periodicity is 5 ms. Therefore, one periodicity includes 10 slots. FIG. 3A shows a slot set including 10 slots. The 10 slots may be denoted as Slot 0, Slot 1, Slot 2, Slot 3, Slot 4, Slot 5, Slot 6, Slot 7, Slot 8, and Slot 9, respectively. Initially, the 10 slots are not configured. One slot (slot) may include 14 symbols. The 14 symbols may be denoted as s0 to s13, respectively.

After configuration is performed based on examples of the foregoing uplink and downlink parameters, the unconfigured time-domain resource shown in FIG. 3A may be updated to a structure shown in FIG. 3B.

Specifically, with reference to the meanings of the uplink and downlink parameters shown in Table 1, a process of obtaining a time-domain resource shown in FIG. 3B is as follows:
1. nrofDownlinkSlots=2 may indicate that two slots counted onward from Slot 0 (the first slot) in the 10 slots described in FIG. 3A are downlink slots. In other words, Slot 0 and Slot 1 are downlink slots (DL slots). In FIG. 3B, a slot denoted as "D" is a DL slot.
2. nrofDownlinkSymbols=3 may indicate that three symbols counted onward from the first symbol in Slot 2 (a next slot of the last downlink slot Slot 1 in nrofDownlinkSlots) are downlink symbols. s0 to s2 are downlink symbols, that is, DL symbols. In FIG. 3B, a symbol denoted as "D" is a downlink symbol.
3. nrofUplinkSlots=1 may indicate that one slot of the 10 slots described in FIG. 3A counted backward from Slot 9 (the last slot) is an uplink slot. Slot 9 is an uplink slot, that is, a UL slot. In FIG. 3B, a slot (slot) denoted as "U" is a UL slot.
4. nrofUplinkSymbols=3 may indicate that three symbols counted backward from the last symbol in Slot 8 (a slot previous to the last uplink slot Slot 9 in nrofUplinkSlots) are uplink symbols. s11 to s13 are uplink symbols, that is, UL symbols. In FIG. 3B, a symbol (symbol) denoted as "U" is a UL symbol.

Remaining unconfigured slots and symbols may be denoted as "F". In this case, the time-domain resource shown in FIG. 3B is a time-domain resource configured by using the cell-level time-domain resource configuration information.

Subsequently, the base station 10 may perform further configuration on the foregoing flexible time-domain resource based on a specific requirement of a UE service scenario. In this case, the time-domain resource configuration information delivered by the base station 10 is the UE-level time-domain resource configuration information described above.

### (2) UE-level time-domain resource configuration

Generally, when the base station 10 sets uplink and downlink time-domain resources applicable to a cell, the base station 10 retains one or more flexible time-domain resources (flexible slots and/or flexible symbols). At a cell level, the flexible time-domain resource may be used for both uplink and downlink. In other words, the flexible time-domain resource may be either a UL time-domain resource or a DL time-domain resource. Subsequently, the base station 10 may perform further configuration on the flexible time-domain resource based on a specific service scenario.

The time-domain resource configuration information delivered by the base station 10 in the foregoing process may be referred to as the UE-level time-domain resource configuration information. The UE-level time-domain resource configuration information is sent for a target UE by the base station 10. Different UEs accessing the base station 10 may receive different UE-level time-domain resource configuration information. In other words, the UE-level time-domain resource configuration information satisfies a time-domain resource configuration requirement of a cell accessed by the UE, and is personalized. Different UEs accessing the same cell have identical cell-level time-domain resource configuration information.

In some embodiments, the base station 10 may deliver the UE-level time-domain resource configuration information by using radio resource control (radio resource control, RRC) signaling. In some embodiments, the base station 10 may alternatively deliver the UE-level time-domain resource configuration information by using slot format indication (Slot Format Indication, SFI) signaling and downlink control information (downlink control information, DCI) signaling.

Specifically, the UE-level time-domain resource configuration information may include a plurality of UE-level time-domain resource configuration parameters. The UE-level time-domain resource configuration parameters may be used to indicate that the flexible slot in the time-domain resource is specifically a UL time-domain resource or a DL time-domain resource in the UE-level time-domain resource configuration process.

The UE-level time-domain resource configuration parameters may include a slot index slotIndex and UE-level uplink and downlink parameters. The slot index may be used to indicate a configured flexible slot. The UE-level uplink and downlink parameters may include an all-DL indicator allDownlink, an all-UL indicator allUplink, a DL symbol quantity nrofDownlinkSymbols in a slot, and a UL symbol quantity nrofUplinkSymbols in a slot.

allDownlink may be used to indicate that all symbols in a slot are DL symbols. allUplink may be used to indicate that all symbols in a slot are UL symbols. nrofDownlinkSymbols may be used to indicate positions and a quantity of DL symbols in a slot. nrofUplinkSymbols may be used to indicate positions and a quantity of UL symbols in a slot.

Specifically, for example, Table 2 shows the UE-level time-domain resource configuration parameters.

**Table 2**

| Parameter | Meaning |
|---|---|
| slotIndex | Slot index |
| allDownlink (all-DL indicator) | All symbols in a slot indicated by slotIndex are set as DL symbols |
| allUplink (all-UL indicator) | All symbols in a slot indicated by slotIndex are set as UL symbols |
| nrofDownlinkSymbols (DL symbol quantity in a slot) | A quantity of DL symbols counted onward from the first symbol in a slot indicated by slotIndex |
| nrofUplinkSymbols (UL symbol quantity in a slot) | A quantity of UL symbols counted backward from the last symbol in a slot indicated by slotIndex |

An example in which the flexible time-domain resource shown in FIG. 3B is used. The base station 10 may deliver the following UE-level time-domain resource configuration information:
slotIndex=2 and allDownlink;
slotIndex=3 and nrofDownlinkSymbols=3.

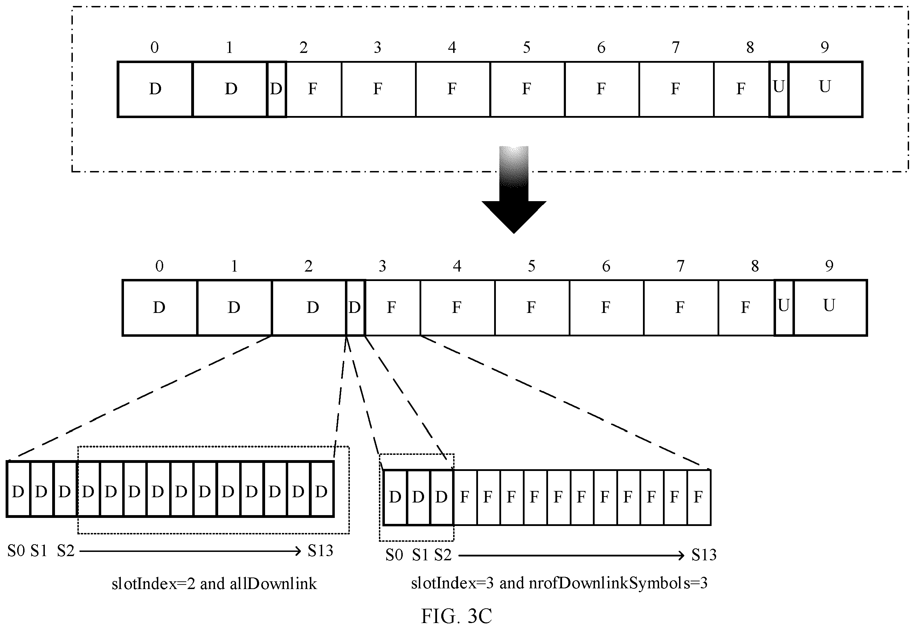

Therefore, the time-domain resource shown in FIG. 3B may be further configured with a structure shown in FIG. 3C. Contents in dashed boxes are the time-domain resource shown in FIG. 3B.

Specifically, with reference to the meanings of the UE-level time-domain resource configuration parameters shown in Table 2, a process of obtaining a time-domain resource shown in FIG. 3C is as follows:
1. When slotIndex=2, allDownlink indicates that a configurable flexible symbol in Slot 2 is set to a downlink symbol "D".
2. When slotIndex=3, nrofDownlinkSymbols=3 indicates that three symbols counted onward from the first symbol in Slot 3, that is, s0, s1, and s2, are set as downlink symbols "D".

A slot indicated by slotIndex may be a first flexible slot. For example, the foregoing slot indicated by slotIndex=2 may be a first flexible slot. The foregoing slot indicated by slotIndex=3 may also be referred to as a first flexible slot.

In some embodiments, based on the cell-level time-domain resource configuration information, the base station 10 may perform further configuration on symbols in the flexible slot by using the DCI signaling.

In the DCI signaling configuration manner, a method is to indicate symbols in the flexible slot based on DCI format 2_0. In this method, the base station 10 and the UE 30 may be preset with a slot format table used by DCI format 2_0. Formats of a plurality of slots may be recorded in the slot format table, and configurations of all symbols in a slot format are fixed. The base station 10 may indicate the UE that usage of the symbols in the slot in UE-level slot configuration information based on slot format numbers.

For example, the following Table 3 shows a slot format table.

**Table 3**

| Format (Slot format number) | Symbol number in a slot (symbol number in a slot) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| ... | ... | ... | ... | ... | ... | ... | ... | ... | ... | ... | ... | ... | ... | ... |

It can be learned from Table 3 that when a slot format number is 0 (the format 0), symbol configuration of a slot is "DDDDDDDDDDDDDD". When a slot format number is 1 (the format 1), symbol configuration of a slot is "UUUUUUUUUUUUUU". When a slot format number is 2 (the format 2), symbol configuration of a slot is "FFFFFFFFFFFFFF". When a slot format number is 3 (the format 3), symbol configuration of a slot is "DDDDDDDDDDDDDF". Remaining slot format numbers and corresponding symbol configurations in Table 3 are deduced by analogy. The base station 10 may deliver a slot format number to the UE 30 to indicate symbol configuration in a specific flexible slot. The symbol configuration in the flexible slot is the same as symbol configuration corresponding to the delivered slot format number.

The following describes a specific process of a time-domain resource management method provided in an embodiment of this application.

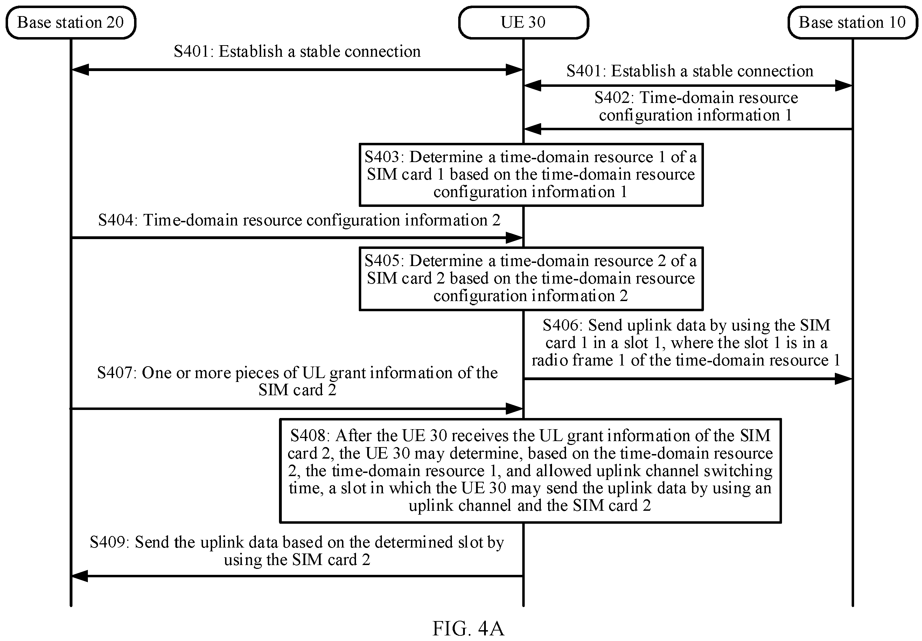

FIG. 4A is a schematic diagram of a specific process of a time-domain resource management method according to an embodiment of this application. As shown in FIG. 4A, the specific process of the method may include the following steps.

S401: UE 30 establishes stable connections with a base station 10 and a base station 20.

The UE 30 may initiate connection requests to the base station 10 and the base station 20 by using an initial access process to establish stable communication connections. The UE 30 includes at least two SIM cards: a SIM card 1 (which may be referred to as a first SIM card) and a SIM card 2 (which may be referred to as a second SIM card). The UE 30 establishing the stable connections with the base station 10 (which may be referred to as a first access network device) and the base station 20 (which may be referred to as a second access network device) includes establishing a stable communication connection with the base station 10 based on the SIM card 1 and establishing a stable communication connection with the base station 20 based on the SIM card 2.

It should be noted that in this embodiment of this application, because the SIM card 1 and the SIM card 2 correspond to different operators or another reason, the SIM card 1 and the SIM card 2 may access different base stations. For example, the SIM card 1 accesses the base station 10 and the SIM card 2 accesses the base station 20. In some examples, the base stations accessed by the SIM card 1 and the SIM card 2 may be the same, and may both be the base station 10 or the base station 20. This is not limited in this embodiment of this application.

S402: The base station 10 sends time-domain resource configuration information 1 to the UE 30.

The time-domain resource configuration information 1 may also be referred to as first time-domain resource configuration information. The time-domain resource configuration information 1 may be used to indicate one or more slots allocated by the base station 10 to the SIM card 1 in a radio frame of a time-domain resource 1 (also referred to as a first time-domain resource).

S403: The UE 30 determines the time-domain resource 1 of the SIM card 1 in the UE 30 based on the time-domain resource configuration information 1.

Specifically, after the stable connection is established between the base station 10 and the UE 30, the base station 10 may send the time-domain resource configuration information 1 to the UE 30 by using cell-specific RRC signaling, UE-specific RRC signaling, UE-group SFI signaling, and UE-specific DCI signaling. The time-domain resource configuration information 1 may be used by the UE 30 to determine locations and a quantity of available uplink slots (symbols), downlink slots (symbols), and flexible slots in the radio frame of the time-domain resource 1 of the SIM card 1. The UE 30 may perform uplink and downlink data transmission with the base station 10 based on the time-domain resource 1 by using the SIM card 1. Periodicity duration in the time-domain resource 1 may be referred to as first periodicity duration. For example, if the periodicity duration in the time-domain resource 1 is 5 ms, the 5 ms may be referred to as the first periodicity duration.

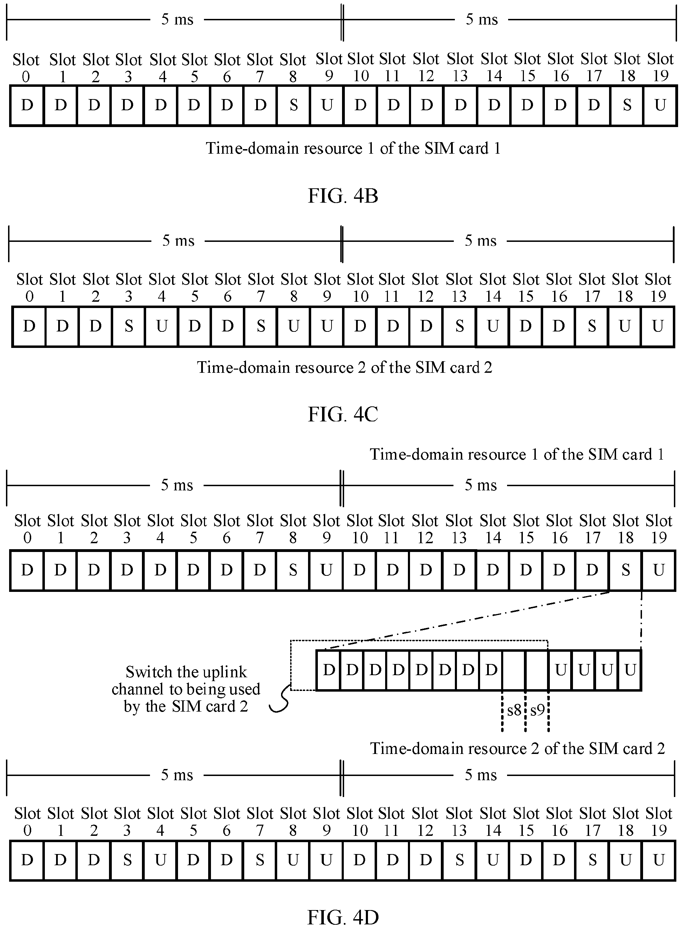

For example, the time-domain resource 1 may be as shown in FIG. 4B. The periodicity duration in the time-domain resource 1 is 5 ms, and within one periodicity, a ratio of a downlink slot, a flexible slot, and an uplink slot of the time-domain resource 1 is 8:1:1.

S404: The base station 20 sends time-domain resource configuration information 2 to the UE 30.

The time-domain resource configuration information 2 may also be referred to as second time-domain resource configuration information. The time-domain resource configuration information 2 may be used to indicate one or more slots allocated by the base station 20 to the SIM card 2 in a radio frame of a time-domain resource 2 (also referred to as a second time-domain resource).

S405: The UE 30 determines the time-domain resource 2 of the SIM card 2 in the UE 30 based on the time-domain resource configuration information 2.

Specifically, after the stable connection is established between the base station 20 and the UE 30, the base station 20 may send the time-domain resource configuration information 2 to the UE 30 by using cell-specific RRC signaling, UE-specific RRC signaling, UE-group SFI signaling, and UE-specific DCI signaling. The time-domain resource configuration information 2 may be used by the UE 30 to determine locations and a quantity of available uplink slots (symbols), downlink slots (symbols), and flexible slots in the radio frame of the time-domain resource 2 of the SIM card 2. The UE 30 may perform uplink and downlink data transmission with the base station 20 based on the time-domain resource 2 by using the SIM card 2. Periodicity duration in the time-domain resource 2 may be referred to as second periodicity duration. For example, if the periodicity duration in the time-domain resource 2 is 5 ms, the 5 ms may be referred to as the second periodicity duration.

For example, the time-domain resource 2 may be as shown in FIG. 4C. The periodicity duration in the time-domain resource 2 is 5 ms, and within one periodicity, a ratio of a downlink slot, a flexible slot, and an uplink slot of the time-domain resource 2 is 5:2:3.

It should be noted that the time-domain resource configuration information 1 and the time-domain resource configuration information 2 may be the same or different. An example in which the time-domain resource configuration information 1 and the time-domain resource configuration information 2 are different is used for description in this embodiment of this application.

S406: The UE 30 sends uplink data to the base station 10 by using the SIM card 1 in a slot 1. The slot 1 is in a radio frame 1 of the time-domain resource 1.

It should be noted that before the UE 30 sends the uplink data to the base station 10 by using the SIM card 1 in the slot 1, the base station 10 may send uplink grant (uplink grant, UL grant) information corresponding to the slot 1 to the UE 30, to indicate the UE 30 to send the uplink data by using the SIM card 1 in the slot 1. The slot 1 may be an uplink slot or a flexible slot. This is not limited in this application.

Specifically, the UL grant information is DCI format 0. The UL grant information sent by the base station 10 carries physical uplink shared channel (physical uplink shared channel, PUSCH) resource information allocated by the base station 10 to the UE 30 for sending the uplink data by using the SIM card 1, and indicates the UE 30 to send, after the UE 30 receives the UL grant information, the uplink data to the base station 10 at an interval of a specified value A1 (for example, 2, 3, or 4) of slots based on the PUSCH resource information by using the SIM card 1 in a specified uplink slot/uplink symbol. For example, if the specified value A1 is 3, it means that the UE 30 may send, after the UE 30 receives the UL grant information, the uplink data to the base station 10 at an interval of three slots based on the PUSCH resource information by using the SIM card 1 in a specified uplink slot/uplink symbol.

S407: The base station 20 may send one or more pieces of UL grant information of the SIM card 2 to the UE 30.

Specifically, the UE 30 may receive the one or more pieces of UL grant information. The one or more pieces of UL grant information include one or more pieces of UL grant information of the SIM card 2 sent by the base station 20, and the one or more pieces of UL grant information sent by the base station 20 include UL grant information 1. It should be noted that the UE 30 may receive the one or more pieces of UL grant information sent by the base station 20 before sending the uplink data by using the SIM card 1 in the slot 1, or may receive the one or more pieces of UL grant information sent by the base station 20 after sending the uplink data by using the SIM card 1 in the slot 1. In other words, timing of receiving the one or more pieces of UL grant information sent by the base station 20 is not limited in this application.

The UL grant information sent by the base station 20 carries PUSCH resource information allocated by the base station 20 to the UE 30 for sending the uplink data by using the SIM card 2, and indicates the UE 30 to send, after the UE 30 receives the UL grant information, the uplink data to the base station 20 at an interval of a specified value A1 (for example, 2, 3, or 4) of slots based on the PUSCH resource information by using the SIM card 2 in a specified uplink slot/uplink symbol. For example, if the specified value A1 is 3, it means that the UE 30 may send, after the UE 30 receives the UL grant information, the uplink data to the base station 20 at an interval of three slots based on the PUSCH resource information by using the SIM card 2 in a specified uplink slot/uplink symbol.

S408: After the UE 30 receives the UL grant information of the SIM card 2, the UE 30 may determine, based on the time-domain resource 1, the time-domain resource 2, and allowed uplink channel switching time, a slot in which the UE 30 may send the uplink data by using an uplink channel and the SIM card 2.

It may be understood that, after the UE 30 sends the uplink data by using the SIM card 1, even though the uplink data is sent and the uplink channel is not released in time, the uplink channel is still occupied by the SIM card 1. When the SIM card 2 needs to send the uplink data and satisfies conditions described in subsequent scenarios (A), (B), and (C), the UE 30 switches the uplink channel from being used by the SIM card 1 to being used by the SIM card 2.

The allowed uplink channel switching time herein is a time point when the uplink channel is allowed to switch from being used by the SIM card 1 performing a high-priority service to being used by the SIM card 2 performing a low-priority service. Based on different allowed uplink channel switching time, a specific implementation of the step may include following cases.
(A) The allowed uplink channel switching time is associated with a periodicity in a time-domain resource.

The allowed uplink channel switching time being associated with the periodicity in the time-domain resource may be that time when the UE 30 switches the uplink channel from being used by a SIM card performing a high-priority service (such as the SIM card 1) to being used by a SIM card performing a low-priority service (such as the SIM card 2) is consistent with the periodicity in the time-domain resource.

For example, when periodicities of the time-domain resource 1 and the time-domain resource 2 are the same, and both are 5 ms, the allowed uplink channel switching time is 5 ms. When the periodicities of the time-domain resource 1 and the time-domain resource 2 are the same, and both are 2.5 ms, the allowed uplink channel switching time is 2.5 ms. When the periodicities of the time-domain resource 1 and the time-domain resource 2 are different, the allowed uplink channel switching time is consistent with shorter periodicity duration. For example, if the periodicity of the time-domain resource 1 is 5 ms and the periodicity of the time-domain resource 2 is 2.5 ms, the allowed uplink channel switching time is 2.5 ms. An example in which the periodicities of the time-domain resource 1 and the time-domain resource 2 are the same is used for description in the following embodiments.

Specifically, in this scenario, the UE 30 receives the UL grant information 1 sent by the base station 20. The UL grant information 1 indicates the UE 30 to send the uplink data to the base station 20 by using the SIM card 2 in a slot 2 of a radio frame 2 in the time-domain resource 2. The radio frame 2 is the same as the foregoing radio frame 1 in time, and the slot 2 may be an uplink slot or a flexible slot.

Before the UE 30 sends the uplink data to the base station 20 by using the SIM card 2 in the slot 2, the UE 30 needs to first determine whether the UE 30 sends the uplink data by using the SIM card 1 in a slot 3 of the radio frame 1 in the time-domain resource 1, and whether the UE 30 has sent the uplink data by using the SIM card 1 within a periodicity that the slot 3 is within. If the UE 30 does not send the uplink data by using the SIM card 1 in the slot 3 of the radio frame 1 in time-domain resource 1, and the UE 30 has not sent the uplink data by using the SIM card 1 within the periodicity that the slot 3 is within, the UE 30 switches the uplink channel to being used by the SIM card 2. Otherwise, the UE 30 does not switch the uplink channel to being used by the SIM card 2.

The slot 2 is the same as the slot 3 in time. The slot 1 and the slot 3 are not in the same periodicity (for example, the slot 1 is in a first periodicity and the slot 3 is in a second periodicity). The slot 2 and the slot 1 are not in the same periodicity (that is, the slot 2 is also in the second periodicity).

Specifically, if there are following two situations:
(1) When the UE 30 receives UL grant information 2 sent by the base station 10, the UE 30 may determine to send the uplink data by using the SIM card 1 in the slot 3. When the UE 30 receives UL grant information corresponding to any slot before the slot 3 within the periodicity that the slot 3 is within, the UE 30 may determine that the uplink data has been sent by using the SIM card 1 within the periodicity that the slot 3 is within.

Therefore, when the UE 30 needs to send the uplink data by using the SIM card 1 in the slot 3, and/or the UE 30 has sent the uplink data by using the SIM card 1 within the periodicity that the slot 3 is within, the UE 30 cannot switch the uplink channel to being used by the SIM card 2. The UE 30 needs to continue to determine a slot in the time-domain resource 2 until a slot that satisfies the following situation (2) in the scenario (A) is found. The UE 30 switches the uplink channel to being used by the SIM card 2 in the slot, so that the UE 30 may send the uplink data to the base station 20 by using the SIM card 2.

The UL grant information 2 is used to indicate the UE 30 to send the uplink data by using the SIM card 1 in the slot 3 of the radio frame 1 in the time-domain resource 1.

(2) When the UE 30 does not receive UL grant information 2 sent by the base station 10, the UE 30 determines not to send the uplink data by using the SIM card 1 in the slot 3. When the UE 30 does not receive UL grant information corresponding to any slot before the slot 3 within the periodicity that the slot 3 is within, the UE 30 determines that no uplink data has been sent by using the SIM card 1 within the periodicity that the slot 3 is within.

Therefore, when the UE 30 does not need to send the uplink data by using the SIM card 1 in the slot 3, and the UE 30 has not sent the uplink data by using the SIM card 1 within the periodicity that the slot 3 is within, the UE 30 switches the uplink channel to being used by the SIM card 2.

It should be noted that the slot 3 may be an uplink slot, a flexible slot, or a downlink slot. However, when the slot 3 is a downlink slot, the UE 30 does not receive the UL grant information 2.

The time-domain resource 1 of the SIM card 1 shown in FIG. 4B and the time-domain resource 2 of the SIM card 2 shown in FIG. 4C are used as examples. An example in which the specified value A1 is 3 and both the periodicity duration of the time-domain resource 1 and the time-domain resource 2 are 5 ms is used for description. Slot 0 to Slot 19 of the time-domain resource 1 are in the radio frame 1, and Slot 0 to Slot 19 of the time-domain resource 2 are in the radio frame 2. The radio frame 1 is the same as the radio frame 2 in time.

First, the UE 30 has sent the uplink data to the base station 10 by using the SIM card 1 in Slot 9 (that is, the slot 1) of the time-domain resource 1.

The UE 30 receives the UL grant information 1 at a time point of Slot 15 in the time-domain resource 2. The UL grant information 1 indicates the UE 30 to send the uplink data by using the SIM card 2 in Slot 19 (that is, the slot 2) in the time-domain resource 2.

Before the UE 30 sends the uplink data by using the SIM card 2 in Slot 19 in the time-domain resource 2, if the UE 30 does not receive the UL grant information 2 sent by the base station 10, the UE 30 may determine that the uplink data is not sent by using the SIM card 1 in Slot 19 in the time-domain resource 1. In addition, if the UE 30 does not receive UL grant information corresponding to any slot before Slot 19 (that is, Slot 10 to Slot 18) within a periodicity that Slot 19 in the time-domain resource 1 is within, the UE 30 determines that no uplink data is sent by using the SIM card 1 within the periodicity (that is, within 5 ms from Slot 10 to Slot 19) that Slot 19 in the time-domain resource 1 is within. Therefore, the UE 30 may switch the uplink channel to being used by the SIM card 2.

The UL grant information 2 may be used to indicate the UE 30 to send the uplink data by using the SIM card 1 in Slot 19 (that is, the slot 3) in the time-domain resource 1. Slot 9 and Slot 19 in the time-domain resource 1 are not in the same periodicity. To be specific, Slot 9 in the time-domain resource 1 is in the first periodicity, and Slot 19 in the time-domain resource 1 and Slot 19 in the time-domain resource 2 are in the second periodicity.

(B) The allowed uplink channel switching time is one slot.

The allowed uplink channel switching time being one slot may be that the UE 30 may switch, based on a change of slot numbers in a time-domain resource, the uplink channel from being used by the SIM card 1 to being used by the SIM card 2.

Specifically, in this scenario, the UE 30 receives the UL grant information 1 sent by the base station 20. The UL grant information 1 indicates the UE 30 to send the uplink data to the base station 20 by using the SIM card 2 in a slot 2 of a radio frame 2 in the time-domain resource 2. The radio frame 2 is the same as the foregoing radio frame 1 in time, and the slot 2 may be an uplink slot or a flexible slot.

Before the UE 30 sends the uplink data to the base station 20 by using the SIM card 2 in the slot 2, the UE 30 needs to first determine whether the UE 30 sends the uplink data by using the SIM card 1 in a slot 3 of the radio frame 1 in the time-domain resource 1. If the UE 30 does not send the uplink data by using the SIM card 1 in the slot 3 of the radio frame 1 in the time-domain resource 1, the UE 30 switches the uplink channel to being used by the SIM card 2.

The slot 2 is the same as the slot 3 in time. The slot 1, the slot 2, and the slot 3 may be in the same periodicity or in different periodicities. The slot 1 may be adjacent to or not adjacent to the slot 2 in time. For example, when the slot 1 is Slot 18 in the time-domain resource 1 shown in FIG. 4B, and the slot 2 is Slot 19 in the time-domain resource 2 shown in FIG. 4B, the slot 1 may be considered to be adjacent to the slot 2 in time.

Specifically, if there are following two situations:
(1) When the UE 30 receives UL grant information 2 sent by the base station 10, the UE 30 may determine to send the uplink data by using the SIM card 1 in the slot 3. Therefore, the UE 30 cannot switch the uplink channel to being used by the SIM card 2. In this case, the UE 30 needs to continue to determine a slot in the time-domain resource 2 until a slot that satisfies the following situation (2) in the scenario (B) is found. The UE 30 switches the uplink channel to being used by the SIM card 2 in the slot, so that the UE 30 may send the uplink data to the base station 20 by using the SIM card 2.

The UL grant information 2 is used to indicate the UE 30 to send the uplink data by using the SIM card 1 in the slot 3 of the radio frame 1 in the time-domain resource 1.

In some examples, an electronic device (that is, the UE 30) may alternatively receive UL grant information 3 (which may be referred to as second UL grant information) sent by the base station 20 and UL grant information 4 (which may be referred to as third UL grant information) sent by the base station 10. The UL grant information 3 indicates the UE 30 to send the uplink data by using the SIM card 2 in a slot 4 (which may be referred to as a fourth slot) in the time-domain resource 2. The UL grant information 4 indicates the UE 30 to send the uplink data by using the SIM card 1 in the slot 1 in the time-domain resource 1. The slot 4 is the same as the slot 1 in time. In this case, the SIM card 1 and the SIM card 2 conflict in time of sending the uplink data. Because the SIM card 1 performs a high-priority service, the SIM card 1 occupies the uplink channel, and the SIM card 2 cannot send the uplink data. The SIM card 2 continues to find a next slot, namely, the slot 2, that is in the time-domain resource 2 and that may be used for sending the uplink data.

(2) When the UE 30 does not receive UL grant information 2 sent by the base station 10, the UE 30 determines not to send the uplink data by using the SIM card 1 in the slot 3. Therefore, the UE 30 switches the uplink channel to being used by the SIM card 2.

It should be noted that the slot 3 may be an uplink slot, a flexible slot, or a downlink slot. However, when the slot 3 is a downlink slot, the UE 30 does not receive the UL grant information 2.

The time-domain resource 1 of the SIM card 1 shown in FIG. 4B and the time-domain resource 2 of the SIM card 2 shown in FIG. 4C are used as examples. An example in which the specified value A1 is 3 and both the periodicity duration of the time-domain resource 1 and the time-domain resource 2 are 5 ms is used for description. Slot 0 to Slot 19 of the time-domain resource 1 are in the radio frame 1, and Slot 0 to Slot 19 of the time-domain resource 2 are in the radio frame 2. The radio frame 1 is the same as the radio frame 2 in time.

First, the UE 30 has sent the uplink data to the base station 10 by using the SIM card 1 in Slot 18 (that is, the slot 1) of the time-domain resource 1.

The UE 30 receives the UL grant information 1 at a time point of Slot 15 in the time-domain resource 2. The UL grant information 1 is used to indicate the UE 30 to send the uplink data by using the SIM card 2 in Slot 19 (that is, the slot 2) in the time-domain resource 2.

Before the UE 30 sends the uplink data by using the SIM card 2 in Slot 19 in the time-domain resource 2, if the UE 30 does not receive the UL grant information 2 sent by the base station 10, the UE 30 determines not to send the uplink data by using the SIM card 1 in Slot 19 in the time-domain resource 1. Therefore, the UE 30 may switch the uplink channel to being used by the SIM card 2. The UL grant information 2 may indicate the UE 30 to send the uplink data by using the SIM card 1 in Slot 19 (that is, the slot 3) in the time-domain resource 1.

It should be noted that in this example, the slot 1 is Slot 18 in the time-domain resource 1, the slot 2 is Slot 19 in the time-domain resource 2, and the slot 1 is adjacent to the slot 2 in time. In another example, the slot 1 may not be adjacent to the slot 2. For example, there may be an interval of two slots, three slots, or the like between the slot 1 and the slot 2. This is not limited in this application.

For another example, the electronic device may receive the UL grant information 1 and UL grant information 3 sent by the base station 20 and UL grant information 4 sent by the base station 10. The UL grant information 3 indicates the UE 30 to send the uplink data by using the SIM card 2 in Slot 18 (that is, a slot 4) in the time-domain resource 2. The UL grant information 4 indicates the UE 30 to send the uplink data by using the SIM card 1 in Slot 18 (that is, the slot 1) in the time-domain resource 1. The slot 4 is the same as the slot 1 in time.

In this case, the SIM card 1 and the SIM card 2 conflict in time of sending the uplink data. Because the SIM card 1 performs a high-priority service, the SIM card 1 occupies the uplink channel to send the uplink data in Slot 18 in time-domain resource 1, and the SIM card 2 cannot send the uplink data.

Because the UL grant information 1 indicates the UE 30 to send the uplink data by using the SIM card 2 in Slot 19 (that is, the slot 2) in the time-domain resource 2, before the UE 30 sends the uplink data by using the SIM card 2 in Slot 19 in the time-domain resource 2, if the UE 30 does not receive the UL grant information 2 sent by the base station 10, the UE 30 determines not to send the uplink data by using the SIM card 1 in Slot 19 in the time-domain resource 1. Therefore, the UE 30 may switch the uplink channel to being used by the SIM card 2, so that the UE 30 may send the uplink data by using the SIM card 2. The UL grant information 2 may be used to indicate the UE 30 to send the uplink data by using the SIM card 1 in Slot 19 (that is, the slot 3) in the time-domain resource 1.

(C) The allowed uplink channel switching time is one symbol.

The allowed uplink channel switching time being one symbol may be that the UE 30 may switch, based on a change of symbol numbers in a time-domain resource, the uplink channel from being used by the SIM card 1 to being used by the SIM card 2.

Specifically, in this scenario, the UE 30 may receive the UL grant information 1 sent by the base station 20. The UL grant information 1 indicates the UE 30 to send the uplink data to the base station 20 by using the SIM card 2 in a slot 2 of a radio frame 2 in the time-domain resource 2. The radio frame 2 is the same as the foregoing radio frame 1 in time, and the slot 2 may be an uplink slot or a flexible slot.

Before the UE 30 sends the uplink data to the base station 20 by using the SIM card 2 in the slot 2, the UE 30 needs to first determine whether the UE 30 sends the uplink data by using the SIM card 1 in a slot 3 of the radio frame 1 in the time-domain resource 1. The slot 2 is the same as the slot 3 in time. Specifically, if there are following two situations:
(1) When the UE 30 receives UL grant information 2 sent by the base station 10, the UE 30 may determine to send the uplink data by using the SIM card 1 in the slot 3. The UE 30 may determine, based on the UL grant information 2, to send the uplink data by using the SIM card 1 in one or more uplink symbols in the slot 3. Therefore, the UE 30 may switch the uplink channel to being used by the SIM card 2 in one or more uplink symbols in the slot 2. Time of the one or more uplink symbols in the slot 2 is different from time of the one or more uplink symbols in the slot 3.
   The UL grant information 2 is used to indicate the UE 30 to send the uplink data by using the SIM card 1 in the one or more uplink symbols in the slot 3 of the radio frame 1 in the time-domain resource 1.
(2) When the UE 30 does not receive UL grant information 2 sent by the base station 10, the UE 30 may determine not to send the uplink data to the base station 10 by using the SIM card 1 in the slot 3. Therefore, the UE 30 switches the uplink channel to being used by the SIM card 2 in entire duration of the slot 3.

It should be noted that the slot 3 may be an uplink slot, a flexible slot, or a downlink slot. However, when the slot 3 is a downlink slot, the UE 30 does not receive the UL grant information 2.

Therefore, when the situation (1) is implemented, the slot 2 and the slot 3 may be as follows:
When the slot 2 is an uplink slot, the slot 3 is an uplink slot;
when the slot 2 is an uplink slot, the slot 3 is a flexible slot;
when the slot 2 is a flexible slot, the slot 3 is an uplink slot; or
when the slot 2 is a flexible slot, the slot 3 is a flexible slot.

The time-domain resource 1 of the SIM card 1 shown in FIG. 4B and the time-domain resource 2 of the SIM card 2 shown in FIG. 4C are used as examples. An example in which the specified value A1 is 2 and both the periodicity duration of the time-domain resource 1 and the time-domain resource 2 are 5 ms is used for description. Slot 0 to Slot 19 of the time-domain resource 1 are in the radio frame 1, and Slot 0 to Slot 19 of the time-domain resource 2 are in the radio frame 2. The radio frame 1 is the same as the radio frame 2 in time.

As shown in FIG. 4D, first, the UE 30 has sent the uplink data to the base station 10 by using the SIM card 1 in Slot 9 (that is, the slot 1) of the time-domain resource 1.

The UE 30 receives the UL grant information 1 at a time point of Slot 15 in the time-domain resource 2. The UL grant information 1 indicates the UE 30 to send the uplink data by using the SIM card 2 in Slot 18 (that is, the slot 2) in the time-domain resource 2.

Before the UE 30 sends the uplink data by using the SIM card 2 in Slot 18 in the time-domain resource 2, the UE 30 receives the UL grant information 2 sent by the base station 10. The UL grant information 2 indicates the UE 30 to send the uplink data by using the SIM card 1 in symbol 10 to symbol 13 (which may be denoted as s10 to s13 for short) in Slot 18 (that is, the slot 3, which is a flexible slot in this example) in the time-domain resource 1. Therefore, the UE 30 may switch, at time of symbol 0 to symbol 9 (which may be denoted as s0 to s9 for short) of Slot 18 in the time-domain resource 1, the uplink channel to being used by the SIM card 2, so that the UE 30 may send the uplink data by using the SIM card 2 in the symbols s0 to s9 of Slot 18 in the time-domain resource 2.

It should be noted that when the UE 30 implements the scenario (C) in which the allowed uplink channel switching time is one symbol, the UE 30 may have not sent the uplink data to the base station 10 by using the SIM card 1 in the slot 1. In other words, step S406 may not be performed.

S409: The UE 30 sends the uplink data to the base station 20 based on the determined slot by using SIM card 2.

Specifically, based on different allowed uplink channel switching time, a specific implementation of the step may include the following cases.
(A) The allowed uplink channel switching time is associated with a periodicity in a time-domain resource.
   The UE 30 may send, by using the SIM card 2 in the determined slot, the uplink data to the base station 20 based on the PUSCH resource information allocated by the base station 20.
(B) The allowed uplink channel switching time is one slot.
   The UE 30 may send, by using the SIM card 2 in the determined slot, the uplink data to the base station 20 based on the PUSCH resource information allocated by the base station 20.
(C) The allowed uplink channel switching time is one symbol.

The UE 30 may send, by using the SIM card 2 in one or more symbols in the determined slot, the uplink data to the base station 20 based on the PUSCH resource information allocated by the base station 20.

It may be understood that the radio frame 1 may be referred to as a first radio frame, the radio frame 2 may be referred to as a second radio frame, and the slot 1 may be referred to as a first slot. The slot 2 may be referred to as a second slot in the scenarios (A) and (B), and may be referred to as a fifth slot in the scenario (C). The slot 3 may be referred to as a third slot in the scenarios (A) and (B), and may be referred to as a sixth slot in the scenario (C). The UL grant information 1 may be referred to as first UL grant information, and the UL grant information 2 may be referred to as fourth UL grant information.

It should be noted that in the foregoing embodiments, when duration of the first periodicity is 5 milliseconds, a starting moment of the first periodicity may be the 0^{th} millisecond or the 5^{th} millisecond of the radio frame, and when the duration of the first periodicity is 2.5 milliseconds, the starting moment of the first periodicity may be the 0^{th} millisecond, the 2.5^{th} millisecond, the 5^{th} millisecond, or the 7.5^{th} millisecond of the radio frame. The second periodicity may be a next periodicity adjacent to the first periodicity.

Next, a possible product form of the UE 30 provided in an embodiment of this application is described.

It should be understood that any product form having a function of the UE 30 falls within the protection scope of embodiments of this application. It should also be understood that the following descriptions are merely an examples, and the product form of the UE 30 in this embodiment of this application is not limited thereto.

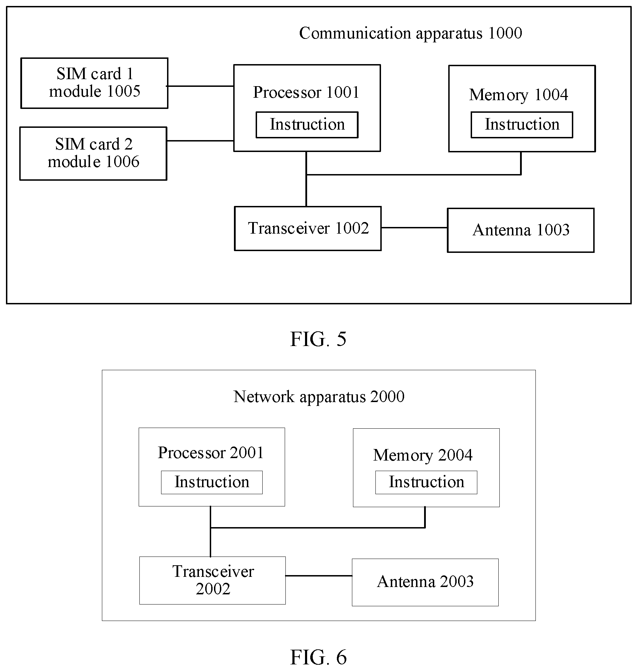

As a possible product form, the UE 30 in this embodiment of this application may be implemented by a general bus architecture. FIG. 5 is a schematic diagram of a structure of a communication apparatus 1000 according to an embodiment of this application. The communication apparatus 1000 may be UE or an apparatus in the UE.

As shown in FIG. 5, the communication apparatus 1000 includes a processor 1001, a transceiver 1002 internally connected to and communicating with the processor, an antenna 1003, a memory 1004, a SIM card 1 module 1005, and a SIM card 2 module 1006. The processor 1001 is a general-purpose processor, a dedicated purpose processor, or the like, for example, may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), execute a computer program, and process data of the computer program.

The transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiving machine, a receiving circuit, or the like, and is configured to implement a receiving function. The transmitter may be referred to as a transmitting machine, a transmitting circuit, or the like, and is configured to implement a sending function.

The communication apparatus 1000 may further include the antenna 1003 and/or a radio frequency unit (not shown). The antenna 1003 and/or the radio frequency unit may be located inside the communication apparatus 1000 or may be separated from the communication apparatus 1000. In other words, the antenna 1003 and/or the radio frequency unit may be deployed in a remote manner or a distributed manner. The antenna 1003 may be configured to transmit and receive electromagnetic wave signals.

The communication apparatus 1000 may include one or more memories 1004. The memory 1004 may store instructions. The instructions may be a computer program. The computer program may be run on the communication apparatus 1000 to enable the communication apparatus 1000 to perform the method in the foregoing method embodiments. Optionally, the memory 1004 may further store data. The communication apparatus 1000 and the memory 1004 may be disposed separately, or may be integrated together.

The processor 1001, the transceiver 1002, and the memory 1004 may be connected via a communication bus.

In this embodiment of this application, instructions for implementing the time-domain resource configuration method and the time-domain resource management method, and receiving and sending a signal based on the time-domain configuration information may be stored in the memory 1004 and the processor 1001.

In this embodiment of this application, the communication apparatus 1000 may receive cell-level time-domain configuration information in a broadcast channel by using the transceiver 1002, the antenna 1003, and/or the radio frequency unit. Then, the communication apparatus 1000 may receive and/or send, by using the transceiver 1002, the antenna 1003, and/or the radio frequency unit, a signal based on a time-domain resource type indicated by the time-domain resource configuration information. Specifically, in a UL slot or symbol, the transceiver 1002, the antenna 1003, and/or the radio frequency unit may send uplink signals to the base station 10 and the base station 20 via a UL carrier. In a DL slot or symbol, the transceiver 1002, the antenna 1003, and/or the radio frequency unit may receive, via a DL carrier, signals delivered by the base station 10 and the base station 20.

In this embodiment of this application, when a SIM card 2 needs to perform uplink scheduling in a specified slot, and when it is determined that a SIM card 1 does not perform uplink scheduling at time of the slot, the processor 1001 may switch an uplink channel to being used by the SIM card 2 for the uplink scheduling. For detailed descriptions, refer to the description of the embodiment shown in FIG. 4A.

In this embodiment of this application, the SIM card 1 module 1005 may run a high-priority service (for example, a call service) with a high real-time requirement, and the SIM card 2 module 1006 may run a low-priority service (for example, browsing a web page) with a low real-time requirement. The SIM card 1 module 1005 may communicate with the base station 10, and the SIM card 2 module 1006 may communicate with the base station 20. The SIM card 1 module 1005 and the SIM card 2 module 1006 may perform communication services simultaneously. When the transceiver 1002 is configured with only one radio frequency transmission channel, the SIM card 1 module 1005 and the SIM card 2 module 1006 may transmit signals to the base stations at different time periods in a time division multiplexing manner by using the same radio frequency transmission channel.

A scope of the communication apparatus described in this application is not limited thereto, and a structure of the communication apparatus may not be limited to FIG. 5. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and a computer program;
(3) an ASIC, such as a modem (Modem);
(4) a module that can be embedded in another device;
(5) a receiver, a terminal, a smart terminal, a cellular phone, a wireless device, a handheld device, a mobile unit, a vehicle-mounted device, a network device, a cloud device, an artificial intelligence device, or the like;
(6) another item.

Next, a network apparatus 2000 that enables an access network device (for example, the base station 10) to implement the uplink time-domain resource management method provided in this application is described.

The network apparatus 2000 shown in FIG. 6 may be the access network device (the base station 10 or the base station 20) in embodiments of this application, a component in the access network device for implementing the foregoing method, or a chip used in the access network device. The chip may be a system-on-a-chip (System-On-a-Chip, SOC), a baseband chip having a communication function, or the like.

As shown in FIG. 6, the network apparatus 2000 includes a processor 2001 and a transceiver 2002 internally connected to and communicating with the processor. Optionally, the network apparatus 2000 may further include an antenna 2003 and/or a radio frequency unit (not shown). Optionally, the network apparatus 2000 may include one or more memories 2004. The memory 2004 may store instructions. The instructions may be a computer program. The computer program may be run on the network apparatus 2000 to enable the network apparatus 2000 to perform the method in the foregoing method embodiments.

In this embodiment of this application, instructions for implementing the time-domain resource configuration method and the time-domain resource management method, and receiving and sending a signal based on the time-domain resource configuration information may be stored in the memory 2004 and the processor 2001.

In this embodiment of this application, the network apparatus 2000 may broadcast cell-level time-domain resource configuration information to a terminal device in a cell by using the transceiver 2002, the antenna 2003, and/or the radio frequency unit. Then, after the terminal device accesses the network apparatus 2000, the network apparatus 2000 may receive and/or send a signal based on a time-domain resource type indicated by the time-domain resource configuration information. For example, in a UL slot or symbol, the transceiver 2002, the antenna 2003, and/or the radio frequency unit may receive, via a UL carrier, uplink signals sent by the terminal device. In a DL slot or symbol, the transceiver 2002, the antenna 2003, and/or the radio frequency unit may send downlink signals to the terminal device via a DL carrier.

The processor in embodiments of this application may include but is not limited to at least one of the following: various types of computing devices that run software, such as a central processing unit (central proce ssing unit, CPU), a microprocessor, a digital signal processor (DSP), a microcontroller (microcontroller unit, MCU), or an artificial intelligence processor. Each computing device may include one or more cores configured to perform an operation or processing execute a software instruction. The processor may be an independent semiconductor chip, or may be integrated with another circuit to form a semiconductor chip. For example, the processor and another circuit (such as an encoding/decoding circuit, a hardware acceleration circuit, or various buses and interface circuits) may form a SoC (system-on-a-chip). Alternatively, the processor may be integrated into an ASIC as a built-in processor of the ASIC. The ASIC integrated with the processor may be independently packaged or may be packaged with another circuit. In addition to the core configured to perform an operation or processing by executing a software instruction, the processor may further include a necessary hardware accelerator, for example, a field programmable gate array (field programmable gate array, FPGA), a PLD (programmable logic device), or a logic circuit for implementing a dedicated logic operation.

The memory in embodiments of this application may include at least one of the following types: a read-only memory (read-onlymemory, ROM) or another type of static storage device that can store static information and instructions, a random access memory (random access memory, RAM) or another type of dynamic storage device that can store information and instructions, or an electrically erasable programmable read-only memory (Electrically erasable programmable-only memory, EEPROM). In some scenarios, the memory may be a compact disc read-only memory (compact disc read-only memory, CD ROM) or another compact disc storage, an optical disc storage (including a compressed optical disc, a laser disc, an optical disc, a digital versatile optical disc, a Blu-ray disc, or the like), a magnetic disk storage medium or another magnetic storage device, or any other medium that can be configured to carry or store expected program code in the form of an instruction or a data structure and that can be accessed by a computer, but is not limited thereto.

As used in the foregoing embodiments, based on the context, the term "when" may be interpreted as a meaning of "if", "after", "in response to determining", or "in response to detecting". Similarly, based on the context, the phrase "when it is determined" or "if (a stated condition or event) is detected" may be interpreted as a meaning of "if it is determined", "in response to determining", "when (a stated condition or event) is detected", or "in response to detecting (a stated condition or event)" .

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures in the methods in the foregoing embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

## Claims

1. A time-domain resource management method, applied to an electronic device (30) comprising a first subscriber identity module, SIM card and a second SIM card, wherein the electronic device is configured with only one radio frequency transmission channel, the electronic device sends uplink data to a first access network device (10) based on the radio frequency transmission channel by using the first SIM card, and sends uplink data to a second access network device (20) based on the radio frequency transmission channel by using the second SIM card; and comprising:
receiving (S402), by the electronic device (30), first time-domain resource configuration information sent by the first access network device (10), wherein the first time-domain resource configuration information is used to indicate one or more slots allocated by the first access network device (10) to the first SIM card in a radio frame of a first time-domain resource;
receiving (S404), by the electronic device (30), second time-domain resource configuration information sent by the second access network device (20), wherein the second time-domain resource configuration information is used to indicate one or more slots allocated by the second access network device to the second SIM card in a radio frame of a second time-domain resource;
sending (S406), by the electronic device (30), the uplink data to the first access network device (10) by using the first SIM card in a first slot, wherein the first slot is in a first radio frame of the first time-domain resource; and
sending (S409), by the electronic device (30), the uplink data to the second access network device (20) by using the second SIM card on the radio frequency transmission channel in a second slot of a second radio frame in the second time-domain resource when the electronic device determines, before the electronic device sends the uplink data in the second slot, not to send the uplink data by using the first SIM card in a third slot of the first radio frame, wherein
the first radio frame is the same as the second radio frame in time, and the second slot is the same as the third slot in time.

2. The method according to claim 1, wherein the method further comprises:
receiving (S407), by the electronic device (30), one or more pieces of uplink grant UL grant information, wherein the one or more pieces of uplink grant UL grant information comprise first UL grant information sent by the second access network device (20), and the first UL grant information is used to indicate the electronic device to send the uplink data by using the second SIM card in the second slot.

3. The method according to claim 1, wherein before the sending (S406), by the electronic device (30), the uplink data to the first access network device (10) by using the first SIM card in a first slot, the method further comprises:
receiving, by the electronic device (30), second UL grant information sent by the second access network device (20), and receiving third UL grant information sent by the first access network device (10), wherein
the second UL grant information is used to indicate the electronic device (30) to send the uplink data by using the second SIM card in a fourth slot of the second time-domain resource, the third UL grant information is used to indicate the electronic device to send the uplink data by using the first SIM card in the first slot, and the first slot is the same as the fourth slot in time.

4. The method according to claim 1, wherein the first slot is an uplink slot or a flexible slot, and the second slot is an uplink slot or a flexible slot.

5. The method according to claim 1, wherein the method further comprises:
determining, by the electronic device (30) when the electronic device does not receive fourth UL grant information, not to send the uplink data by using the first SIM card in the third slot, wherein
the fourth UL grant information is used to indicate the electronic device (30) to send the uplink data by using the first SIM card in the third slot of the first radio frame in the first time-domain resource.

6. The method according to claim 1, wherein the first slot is in a first periodicity, wherein when duration of the first periodicity is 5 milliseconds, a starting moment of the first periodicity is the 0^{th} millisecond or the 5^{th} millisecond of the radio frame, and when the duration of the first periodicity is 2.5 milliseconds, the starting moment of the first periodicity is the 0^{th} millisecond, the 2.5^{th} millisecond, the 5^{th} millisecond, or the 7.5^{th} millisecond of the radio frame.

7. The method according to claim 6, wherein the first slot and the second slot are in the first periodicity.

8. The method according to claim 1, wherein the first slot is adjacent to the second slot in time.

9. The method according to claim 6, wherein the first slot is in the first periodicity, the second slot and the third slot are in a second periodicity, and the second periodicity is a next periodicity adjacent to the first periodicity; and
the sending (S409), by the electronic device (30), the uplink data to the second access network device (20) by using the second SIM card on the radio frequency transmission channel in a second slot of a second radio frame in the second time-domain resource when the electronic device determines, before the electronic device sends the uplink data in the second slot, not to send the uplink data by using the first SIM card in a third slot of the first radio frame specifically comprises:
sending, by the electronic device (30), when the electronic device determines not to send the uplink data by using the first SIM card in the third slot and the electronic device determines not to send the uplink data by using the first SIM card within the second periodicity before the third slot, the uplink data to the second access network device (20) by using the second SIM card on the radio frequency transmission channel in the second slot.

10. A time-domain resource management method, applied to an electronic device (30) comprising a first subscriber identity module, SIM card and a second SIM card, wherein the electronic device is configured with only one radio frequency transmission channel, the electronic device sends uplink data to a first access network device (10) based on the radio frequency transmission channel by using the first SIM card, and sends uplink data to a second access network device (20) based on the radio frequency transmission channel by using the second SIM card; and the method comprises:
receiving (S402), by the electronic device (30), first time-domain resource configuration information sent by the first access network device (10), wherein the first time-domain resource configuration information is used to indicate one or more slots allocated by the first access network device to the first SIM card in a radio frame of a first time-domain resource;
receiving (S404), by the electronic device (30), second time-domain resource configuration information sent by the second access network device (20), wherein the second time-domain resource configuration information is used to indicate one or more slots allocated by the second access network device to the second SIM card in a radio frame of a second time-domain resource; and
sending (S409), by the electronic device (30), the uplink data to the second access network device (20) by using the second SIM card on the radio frequency transmission channel at one or more uplink symbols in a fifth slot in the second time-domain resource when the electronic device (30) determines, before the electronic device sends the uplink data in the fifth slot, to send the uplink data by using the first SIM card at one or more uplink symbols in a sixth slot in the first time-domain resource, wherein
the fifth slot is the same as the sixth slot in time, and time of the one or more uplink symbols in the fifth slot is different from time of the one or more uplink symbols in the sixth slot.

11. The method according to claim 10, wherein the fifth slot is an uplink slot or a flexible slot, and the sixth slot is an uplink slot or a flexible slot.

12. An electronic device (30), comprising: one or more processors, one or more memories, a modem, a radio frequency transmission path, a first SIM card, and a second SIM card, wherein the one or more memories are coupled to the modem, the one or more memories are configured to store computer program code, the computer program code comprises computer instructions, and when the modem executes the computer instructions, the electronic device is enabled to perform the method according to any of claims 1 to 11.

13. A communication system, comprising the electronic device (30) of claim 12, a first access network device (10), and a second access network device (20), wherein
the first access network device (10) is configured to send first time-domain resource configuration information to the electronic device (30);
the second access network device (20) is configured to send second time-domain resource configuration information to the electronic device (30); and
the first and second access network devices (10, 20) are further configured to receive uplink data sent by the electronic device (30).

14. A computer-readable storage medium, comprising computer instructions, wherein when the computer instructions are run on an electronic device (30), the electronic device is enabled to perform the method according to any one of claims 1 to 9 or to any of claims 12-11.

## Patentansprüche

1. Verfahren zur Zeitbereichsressourcenverwaltung, angewendet auf eine elektronische Vorrichtung (30), die eine erste Teilnehmeridentitätsmodul-, SIM-, Karte und eine zweite SIM-Karte umfasst, wobei die elektronische Vorrichtung mit nur einem Hochfrequenzübertragungskanal konfiguriert ist, wobei die elektronische Vorrichtung Uplink-Daten basierend auf dem Hochfrequenzübertragungskanal unter Verwendung der ersten SIM-Karte an eine erste Zugangsnetzvorrichtung (10) sendet und Uplink-Daten basierend auf dem Hochfrequenzübertragungskanal unter Verwendung der zweiten SIM-Karte an eine zweite Zugangsnetzvorrichtung (20) sendet; und umfassend:
Empfangen (S402) durch die elektronische Vorrichtung (30) von ersten Zeitbereichsressourcen-Konfigurationsinformationen, die von der ersten Zugangsnetzvorrichtung (10) gesendet werden, wobei die ersten Zeitbereichsressourcen-Konfigurationsinformationen verwendet werden, um einen oder mehrere Zeitschlitze anzuzeigen, die von der ersten Zugangsnetzvorrichtung (10) der ersten SIM-Karte in einem Funkrahmen einer ersten Zeitbereichsressource zugewiesen wurden;
Empfangen (S404) durch die elektronische Vorrichtung (30) von zweiten Zeitbereichsressourcen-Konfigurationsinformationen, die von der zweiten Zugangsnetzvorrichtung (20) gesendet werden, wobei die zweiten Zeitbereichsressourcen-Konfigurationsinformationen verwendet werden, um einen oder mehrere Zeitschlitze anzuzeigen, die von der zweiten Zugangsnetzvorrichtung der zweiten SIM-Karte in einem Funkrahmen einer zweiten Zeitbereichsressource zugewiesen wurden;
Senden (S406) durch die elektronische Vorrichtung (30) der Uplink-Daten an die erste Zugangsnetzvorrichtung (10) unter Verwendung der ersten SIM-Karte in einem ersten Zeitschlitz, wobei sich der erste Zeitschlitz in einem ersten Funkrahmen der ersten Zeitbereichsressource befindet; und
Senden (S409) durch die elektronische Vorrichtung (30) der Uplink-Daten an die zweite Zugangsnetzvorrichtung (20) unter Verwendung der zweiten SIM-Karte auf dem Hochfrequenzübertragungskanal in einem zweiten Zeitschlitz eines zweiten Funkrahmens in der zweiten Zeitbereichsressource, wenn die elektronische Vorrichtung vor dem Senden der Uplink-Daten im zweiten Zeitschlitz durch die elektronische Vorrichtung bestimmt, die Uplink-Daten nicht unter Verwendung der ersten SIM-Karte in einem dritten Zeitschlitz des ersten Funkrahmens zu senden, wobei
der erste Funkrahmen zeitlich identisch mit dem zweiten Funkrahmen ist und der zweite Zeitschlitz zeitlich identisch mit dem dritten Zeitschlitz ist.

2. Verfahren nach Anspruch 1, wobei das Verfahren ferner umfasst:
Empfangen (S407) durch die elektronische Vorrichtung (30) von einer oder mehreren Uplink-Grant-, UL-Grant-, Informationen, wobei die eine oder mehreren Uplink-Grant-, UL-Grant-, Informationen erste UL-Gewährungs-Informationen umfassen, die von der zweiten Zugangsnetzvorrichtung (20) gesendet werden, und die ersten UL-Gewährungs-Informationen verwendet werden, um die elektronische Vorrichtung anzuweisen, die Uplink-Daten unter Verwendung der zweiten SIM-Karte im zweiten Zeitschlitz zu senden.

3. Verfahren nach Anspruch 1, wobei das Verfahren vor dem Senden (S406) der Uplink-Daten durch die elektronische Vorrichtung (30) an die erste Zugangsnetzwerkvorrichtung (10) unter Verwendung der ersten SIM-Karte in einem ersten Zeitschlitz ferner umfasst:
Empfangen, durch die elektronische Vorrichtung (30), von zweiten UL-Gewährinformationen, die von der zweiten Zugangsnetzwerkvorrichtung (20) gesendet werden, und Empfangen von dritten UL-Gewährinformationen, die von der ersten Zugangsnetzwerkvorrichtung (10) gesendet werden, wobei
die zweiten UL-Gewährinformationen verwendet werden, um die elektronische Vorrichtung (30) anzuweisen, die Uplink-Daten unter Verwendung der zweiten SIM-Karte in einem vierten Zeitschlitz der zweiten Zeitbereichsressource zu senden, die dritten UL-Gewährinformationen verwendet werden, um die elektronische Vorrichtung anzuweisen, die Uplink-Daten unter Verwendung der ersten SIM-Karte im ersten Zeitschlitz zu senden, und der erste Zeitschlitz zeitlich mit dem vierten Zeitschlitz identisch ist.

4. Verfahren nach Anspruch 1, wobei der erste Zeitschlitz ein Uplink-Zeitschlitz oder ein flexibler Zeitschlitz ist und der zweite Zeitschlitz ein Uplink-Zeitschlitz oder ein flexibler Zeitschlitz ist.

5. Verfahren nach Anspruch 1, wobei das Verfahren ferner umfasst:
Bestimmen, durch die elektronische Vorrichtung (30), wenn die elektronische Vorrichtung keine vierten UL-Gewährinformationen empfängt, die Uplink-Daten nicht unter Verwendung der ersten SIM-Karte im dritten Zeitschlitz zu senden, wobei
die vierten UL-Gewährinformationen verwendet werden, um die elektronische Vorrichtung (30) anzuweisen, die Uplink-Daten unter Verwendung der ersten SIM-Karte im dritten Zeitschlitz des ersten Funkrahmens in der ersten Zeitbereichsressource zu senden.

6. Verfahren nach Anspruch 1, wobei der erste Zeitschlitz in einer ersten Periodizität liegt, wobei
wenn die Dauer der ersten Periodizität 5 Millisekunden beträgt, ein Startzeitpunkt der ersten Periodizität die 0. Millisekunde oder die 5. Millisekunde des Funkrahmens ist, und wenn die Dauer der ersten Periodizität 2,5 Millisekunden beträgt, der Startzeitpunkt der ersten Periodizität die 0. Millisekunde, die 2,5. Millisekunde, die 5. Millisekunde oder die 7,5. Millisekunde des Funkrahmens ist.

7. Verfahren nach Anspruch 6, wobei der erste Zeitschlitz und der zweite Zeitschlitz in der ersten Periodizität liegen.

8. Verfahren nach Anspruch 1, wobei der erste Zeitschlitz zeitlich an den zweiten Zeitschlitz angrenzt.

9. Verfahren nach Anspruch 6, wobei der erste Zeitschlitz in der ersten Periodizität liegt, der zweite Zeitschlitz und der dritte Zeitschlitz in einer zweiten Periodizität liegen und die zweite Periodizität eine nächste Periodizität ist, die an die erste Periodizität angrenzt; und
Das Senden (S409) durch die elektronische Vorrichtung (30) der Uplink-Daten an die zweite Zugangsnetzwerkvorrichtung (20) unter Verwendung der zweiten SIM-Karte auf dem Hochfrequenzübertragungskanal in einem zweiten Zeitschlitz eines zweiten Funkrahmens in der zweiten Zeitbereichsressource, wenn die elektronische Vorrichtung vor dem Senden der Uplink-Daten im zweiten Zeitschlitz durch die elektronische Vorrichtung feststellt, dass die Uplink-Daten nicht unter Verwendung der ersten SIM-Karte in einem dritten Zeitschlitz des ersten Funkrahmens gesendet werden sollen, umfasst insbesondere:
Das Senden der Uplink-Daten an die zweite Zugangsnetzwerkvorrichtung (20) durch die elektronische Vorrichtung (30) unter Verwendung der zweiten SIM-Karte auf dem Hochfrequenzübertragungskanal im zweiten Zeitschlitz, wenn die elektronische Vorrichtung feststellt, dass die Uplink-Daten nicht unter Verwendung der ersten SIM-Karte im dritten Zeitschlitz gesendet werden sollen, und die elektronische Vorrichtung feststellt, dass die Uplink-Daten nicht unter Verwendung der ersten SIM-Karte innerhalb der zweiten Periodizität vor dem dritten Zeitschlitz gesendet werden sollen.

10. Ein Zeitbereichsressourcen-Verwaltungsverfahren, angewendet auf eine elektronische Vorrichtung (30), die ein erstes Teilnehmeridentitätsmodul, eine SIM-Karte, und eine zweite SIM-Karte umfasst, wobei die elektronische Vorrichtung mit nur einem Hochfrequenzübertragungskanal konfiguriert ist, wobei die elektronische Vorrichtung Uplink-Daten an eine erste Zugangsnetzwerkvorrichtung (10) basierend auf dem Hochfrequenzübertragungskanal unter Verwendung der ersten SIM-Karte, sendet und Uplink-Daten an eine zweite Zugangsnetzwerkvorrichtung (20) basierend auf dem Hochfrequenzübertragungskanal unter Verwendung der zweiten SIM-Karte sendet; und wobei das Verfahren umfasst:
Das Empfangen (S402) durch die elektronische Vorrichtung (30) von ersten Zeitbereichsressourcen-Konfigurationsinformationen, die von der ersten Zugangsnetzwerkvorrichtung (10) gesendet werden, wobei die ersten Zeitbereichsressourcen-Konfigurationsinformationen verwendet werden, um einen oder mehrere Zeitschlitze anzuzeigen, die von der ersten Zugangsnetzwerkvorrichtung der ersten SIM-Karte in einem Funkrahmen einer ersten Zeitbereichsressource zugewiesen wurden;
Das Empfangen (S404) durch die elektronische Vorrichtung (30) von zweiten Zeitbereichsressourcen-Konfigurationsinformationen, die von der zweiten Zugangsnetzwerkvorrichtung (20) gesendet werden, wobei die zweiten Zeitbereichsressourcen-Konfigurationsinformationen verwendet werden, um einen oder mehrere Zeitschlitze anzuzeigen, die von der zweiten Zugangsnetzwerkvorrichtung der zweiten SIM-Karte in einem Funkrahmen einer zweiten Zeitbereichsressource zugewiesen wurden; und
Das Senden (S409) durch die elektronische Vorrichtung (30) der Uplink-Daten an die zweite Zugangsnetzwerkvorrichtung (20) unter Verwendung der zweiten SIM-Karte auf dem Hochfrequenzübertragungskanal an einem oder mehreren Uplink-Symbolen in einem fünften Zeitschlitz in der zweiten Zeitbereichsressource, wenn die elektronische Vorrichtung (30) vor dem Senden der Uplink-Daten durch die elektronische Vorrichtung im fünften Zeitschlitz feststellt, dass die Uplink-Daten unter Verwendung der ersten SIM-Karte an einem oder mehreren Uplink-Symbolen in einem sechsten Zeitschlitz in der ersten Zeitbereichsressource gesendet werden sollen, wobei
Der fünfte Zeitschlitz ist zeitlich identisch mit dem sechsten Zeitschlitz, und die Zeit der einen oder mehreren Uplink-Symbole im fünften Zeitschlitz unterscheidet sich von der Zeit der einen oder mehreren Uplink-Symbole im sechsten Zeitschlitz.

11. Verfahren nach Anspruch 10, wobei der fünfte Zeitschlitz ein Uplink-Zeitschlitz oder ein flexibler Zeitschlitz ist und der sechste Zeitschlitz ein Uplink-Zeitschlitz oder ein flexibler Zeitschlitz ist.

12. Elektronische Vorrichtung (30), umfassend: einen oder mehrere Prozessoren, einen oder mehrere Speicher, ein Modem, einen Hochfrequenz-Übertragungspfad, eine erste SIM-Karte und eine zweite SIM-Karte, wobei der eine oder die mehreren Speicher mit dem Modem gekoppelt sind, der eine oder die mehreren Speicher dazu konfiguriert sind, Computerprogrammcode zu speichern, der Computerprogrammcode Computeranweisungen umfasst, und wenn das Modem die Computeranweisungen ausführt, die elektronische Vorrichtung veranlasst wird, das Verfahren nach einem der Ansprüche 1 bis 11 auszuführen.

13. Kommunikationssystem, umfassend die elektronische Vorrichtung (30) nach Anspruch 12, eine erste Zugangsnetzvorrichtung (10) und eine zweite Zugangsnetzvorrichtung (20), wobei
die erste Zugangsnetzvorrichtung (10) dazu konfiguriert ist, erste Zeitbereichs-Ressourcenkonfigurationsinformationen an die elektronische Vorrichtung (30) zu senden;
die zweite Zugangsnetzvorrichtung (20) dazu konfiguriert ist, zweite Zeitbereichs-Ressourcenkonfigurationsinformationen an die elektronische Vorrichtung (30) zu senden; und
die erste und die zweite Zugangsnetzvorrichtung (10, 20) ferner dazu konfiguriert sind, Uplink-Daten zu empfangen, die von der elektronischen Vorrichtung (30) gesendet werden.

14. Computerlesbares Speichermedium, umfassend Computeranweisungen, wobei, wenn die Computeranweisungen auf einer elektronischen Vorrichtung (30) ausgeführt werden, die elektronische Vorrichtung veranlasst wird, das Verfahren nach einem der Ansprüche 1 bis 9 oder nach einem der Ansprüche 12 bis 11 auszuführen.

## Revendications

1. Procédé de gestion de ressources dans le domaine temporel, appliqué à un dispositif électronique (30) comprenant un premier module d'identité d'abonné, carte SIM, et une seconde carte SIM, dans lequel le dispositif électronique est configuré avec un seul canal de transmission radiofréquence, le dispositif électronique envoie des données de liaison montante à un premier dispositif de réseau d'accès (10) sur la base du canal de transmission radiofréquence en utilisant la première carte SIM, et envoie des données de liaison montante à un second dispositif de réseau d'accès (20) sur la base du canal de transmission radiofréquence en utilisant la seconde carte SIM ; et comprenant :
la réception (S402), par le dispositif électronique (30), de premières informations de configuration de ressources dans le domaine temporel envoyées par le premier dispositif de réseau d'accès (10), dans lesquelles les premières informations de configuration de ressources dans le domaine temporel sont utilisées pour indiquer un ou plusieurs créneaux alloués par le premier dispositif de réseau d'accès (10) à la première carte SIM dans une trame radio d'une première ressource dans le domaine temporel ;
la réception (S404), par le dispositif électronique (30), de secondes informations de configuration de ressources dans le domaine temporel envoyées par le second dispositif de réseau d'accès (20), dans lesquelles les secondes informations de configuration de ressources dans le domaine temporel sont utilisées pour indiquer un ou plusieurs créneaux alloués par le second dispositif de réseau d'accès à la seconde carte SIM dans une trame radio d'une seconde ressource dans le domaine temporel ;
l'envoi (S406), par le dispositif électronique (30), des données de liaison montante au premier dispositif de réseau d'accès (10) en utilisant la première carte SIM dans un premier créneau, dans lequel le premier créneau est dans une première trame radio de la première ressource dans le domaine temporel ; et
l'envoi (S409), par le dispositif électronique (30), des données de liaison montante au second dispositif de réseau d'accès (20) en utilisant la seconde carte SIM sur le canal de transmission radiofréquence dans un second créneau d'une seconde trame radio dans la seconde ressource dans le domaine temporel lorsque le dispositif électronique détermine, avant que le dispositif électronique n'envoie les données de liaison montante dans le second créneau, de ne pas envoyer les données de liaison montante en utilisant la première carte SIM dans un troisième créneau de la première trame radio, dans lequel
la première trame radio est identique à la seconde trame radio dans le temps, et le second créneau est identique au troisième créneau dans le temps.

2. Procédé selon la revendication 1, dans lequel le procédé comprend en outre :
la réception (S407), par le dispositif électronique (30), d'une ou plusieurs informations d'octroi de liaison montante (UL grant), dans lesquelles les une ou plusieurs informations d'octroi de liaison montante (UL grant) comprennent des premières informations d'octroi de liaison montante (UL grant) envoyées par le second dispositif de réseau d'accès (20), et les premières informations d'octroi de liaison montante (UL grant) sont utilisées pour indiquer au dispositif électronique d'envoyer les données de liaison montante en utilisant la seconde carte SIM dans le second créneau.

3. Procédé selon la revendication 1, dans lequel, avant l'envoi (S406) par le dispositif électronique (30) des données de liaison montante vers le premier dispositif de réseau d'accès (10) en utilisant la première carte SIM dans un premier créneau, le procédé comprend en outre :
la réception, par le dispositif électronique (30), d'une deuxième information d'octroi de liaison montante envoyée par le deuxième dispositif de réseau d'accès (20), et la réception d'une troisième information d'octroi de liaison montante envoyée par le premier dispositif de réseau d'accès (10), dans lequel
la deuxième information d'octroi de liaison montante est utilisée pour indiquer au dispositif électronique (30) d'envoyer les données de liaison montante en utilisant la deuxième carte SIM dans un quatrième créneau de la deuxième ressource de domaine temporel, la troisième information d'octroi de liaison montante est utilisée pour indiquer au dispositif électronique d'envoyer les données de liaison montante en utilisant la première carte SIM dans le premier créneau, et le premier créneau est identique au quatrième créneau dans le temps.

4. Procédé selon la revendication 1, dans lequel le premier créneau est un créneau de liaison montante ou un créneau flexible, et le deuxième créneau est un créneau de liaison montante ou un créneau flexible.

5. Procédé selon la revendication 1, dans lequel le procédé comprend en outre :
la détermination, par le dispositif électronique (30) lorsque le dispositif électronique ne reçoit pas la quatrième information d'octroi de liaison montante, de ne pas envoyer les données de liaison montante en utilisant la première carte SIM dans le troisième créneau, dans lequel
la quatrième information d'octroi de liaison montante est utilisée pour indiquer au dispositif électronique (30) d'envoyer les données de liaison montante en utilisant la première carte SIM dans le troisième créneau de la première trame radio dans la première ressource de domaine temporel.

6. Procédé selon la revendication 1, dans lequel le premier créneau est dans une première périodicité, dans lequel
lorsque la durée de la première périodicité est de 5 millisecondes, un moment de début de la première périodicité est la 0^{ème} milliseconde ou la 5^{ème} milliseconde de la trame radio, et lorsque la durée de la première périodicité est de 2,5 millisecondes, le moment de début de la première périodicité est la 0^{ème} milliseconde, la 2,5^{ème} milliseconde, la 5^{ème} milliseconde ou la 7,5^{ème} milliseconde de la trame radio.

7. Procédé selon la revendication 6, dans lequel le premier créneau et le deuxième créneau sont dans la première périodicité.

8. Procédé selon la revendication 1, dans lequel le premier créneau est adjacent au deuxième créneau dans le temps.

9. Procédé selon la revendication 6, dans lequel le premier créneau est dans la première périodicité, le deuxième créneau et le troisième créneau sont dans une deuxième périodicité, et la deuxième périodicité est une périodicité suivante adjacente à la première périodicité ; et
l'envoi (S409), par le dispositif électronique (30), des données de liaison montante vers le second dispositif de réseau d'accès (20) en utilisant la seconde carte SIM sur le canal de transmission radiofréquence dans un second créneau d'une seconde trame radio dans la seconde ressource dans le domaine temporel lorsque le dispositif électronique détermine, avant que le dispositif électronique n'envoie les données de liaison montante dans le second créneau, de ne pas envoyer les données de liaison montante en utilisant la première carte SIM dans un troisième créneau de la première trame radio comprend spécifiquement:
l'envoi, par le dispositif électronique (30), lorsque le dispositif électronique détermine de ne pas envoyer les données de liaison montante en utilisant la première carte SIM dans le troisième créneau et que le dispositif électronique détermine de ne pas envoyer les données de liaison montante en utilisant la première carte SIM au cours de la seconde périodicité avant le troisième créneau, des données de liaison montante vers le second dispositif de réseau d'accès (20) en utilisant la seconde carte SIM sur le canal de transmission radiofréquence dans le second créneau.

10. Procédé de gestion de ressource dans le domaine temporel, appliqué à un dispositif électronique (30) comprenant un premier module d'identité d'abonné, carte SIM, et une seconde carte SIM, dans lequel le dispositif électronique est configuré avec un seul canal de transmission radiofréquence, le dispositif électronique envoie des données de liaison montante à un premier dispositif de réseau d'accès (10) sur la base du canal de transmission radiofréquence en utilisant la première carte SIM, et envoie des données de liaison montante à un second dispositif de réseau d'accès (20) sur la base du canal de transmission radiofréquence en utilisant la seconde carte SIM ; et le procédé comprend :
la réception (S402), par le dispositif électronique (30), de premières informations de configuration de ressource dans le domaine temporel envoyées par le premier dispositif de réseau d'accès (10), dans lequel les premières informations de configuration de ressource dans le domaine temporel sont utilisées pour indiquer un ou plusieurs créneaux alloués par le premier dispositif de réseau d'accès à la première carte SIM dans une trame radio d'une première ressource dans le domaine temporel ;
la réception (S404), par le dispositif électronique (30), de secondes informations de configuration de ressource dans le domaine temporel envoyées par le second dispositif de réseau d'accès (20), dans lequel les secondes informations de configuration de ressource dans le domaine temporel sont utilisées pour indiquer un ou plusieurs créneaux alloués par le second dispositif de réseau d'accès à la seconde carte SIM dans une trame radio d'une seconde ressource dans le domaine temporel ; et
l'envoi (S409), par le dispositif électronique (30), des données de liaison montante vers le second dispositif de réseau d'accès (20) en utilisant la seconde carte SIM sur le canal de transmission radiofréquence au niveau d'un ou plusieurs symboles de liaison montante dans un cinquième créneau dans la seconde ressource dans le domaine temporel lorsque le dispositif électronique (30) détermine, avant que le dispositif électronique n'envoie les données de liaison montante dans le cinquième créneau, d'envoyer les données de liaison montante en utilisant la première carte SIM au niveau d'un ou plusieurs symboles de liaison montante dans un sixième créneau dans la première ressource dans le domaine temporel, dans lequel
le cinquième créneau est identique au sixième créneau en termes de temps, et le moment d'un ou plusieurs symboles de liaison montante dans le cinquième créneau est différent du moment d'un ou plusieurs symboles de liaison montante dans le sixième créneau.

11. Procédé selon la revendication 10, dans lequel le cinquième créneau est un créneau de liaison montante ou un créneau flexible, et le sixième créneau est un créneau de liaison montante ou un créneau flexible.

12. Dispositif électronique (30), comprenant : un ou plusieurs processeurs, une ou plusieurs mémoires, un modem, un chemin de transmission radiofréquence, une première carte SIM et une seconde carte SIM, dans lequel les une ou plusieurs mémoires sont couplées au modem, les une ou plusieurs mémoires sont configurées pour stocker un code de programme informatique, le code de programme informatique comprend des instructions informatiques, et lorsque le modem exécute les instructions informatiques, le dispositif électronique est amené à exécuter le procédé selon l'une quelconque des revendications 1 à 11.

13. Système de communication, comprenant le dispositif électronique (30) selon la revendication 12, un premier dispositif de réseau d'accès (10) et un second dispositif de réseau d'accès (20), dans lequel
le premier dispositif de réseau d'accès (10) est configuré pour envoyer des premières informations de configuration de ressources dans le domaine temporel au dispositif électronique (30) ;
le second dispositif de réseau d'accès (20) est configuré pour envoyer des secondes informations de configuration de ressources dans le domaine temporel au dispositif électronique (30) ; et
les premier et second dispositifs de réseau d'accès (10, 20) sont en outre configurés pour recevoir des données de liaison montante envoyées par le dispositif électronique (30).

14. Support de stockage lisible par ordinateur, comprenant des instructions informatiques, dans lequel, lorsque les instructions informatiques sont exécutées sur un dispositif électronique (30), le dispositif électronique est amené à exécuter le procédé selon l'une quelconque des revendications 1 à 9 ou selon l'une quelconque des revendications 12 à 11.
